# NOUVEAU FASCICULE DE BREVET EUROPEEN

(11) **EP 1 811 188 B2**
(45) Date de publication et mention de la décision concernant l'opposition: **10.06.2015**
(45) Mention de la délivrance du brevet: 17.12.2008
(21) Numéro de dépôt: 06023881.3
(22) Date de dépôt: 20.11.2006
(51) Int. Cl.: F16B 17/00, F16B 21/04, B60H 1/00

(54) **Dispositif de fixation d'un actionneur et d'un boitier notamment pour véhicule automobile**
Vorrichtung zur Befestigung eines Aktuators und eines Gehäuses, insbesondere für ein Kraftfahrzeug
Device for fastening an actuator and a housing, in particular for a motor vehicle

(30) Priorité: 18.01.2006 FR 0600479
(43) Date de publication de la demande: 25.07.2007
(73) Titulaire: Valeo Systèmes Thermiques, 78321 Le Mesnil St Denis Cedex (FR)
(72) Inventeur: Terranova, Gilbert, 78610 Le Perray en Yvelines (FR); Vincent, Philippe, 28230 Epernon (FR)

(56) Documents cités:
- EP-A- 0 780 622
- EP-A1- 0 595 336
- EP-A2- 1 323 501
- DE-A1-102004 005 028
- FR-A1- 2 743 117
- GB-A- 2 339 715
- LU-A1- 90 774
- US-A- 4 768 545
- US-A- 5 133 617

## Description

L'invention concerne un dispositif de fixation d'un boîtier et d'un actionneur pour véhicule automobile. Un tel dispositif est décrit dans EP 0 780 622 A.

L'actionneur est utilisé pour commander un organe mobile monté à l'intérieur du boîtier, par exemple un volet d'obturation pour appareil de climatisation et/ou de chauffage (HVAC).

L'actionneur est généralement équipé d'un arbre d'entraînement qui vient entraîner en rotation l'organe mobile, après que l'actionneur a été fixé sur le boîtier.

Le dispositif de fixation comporte classiquement des moyens de fixation pour solidariser l'actionneur sur une paroi du boîtier.

Dans des réalisations connues, les moyens de fixation sont du type à baïonnette. De tels moyens de fixation comprennent une collerette de raccord prévue sur l'actionneur et un orifice débouchant agencé dans la paroi du boîtier. La collerette de raccord de l'actionneur est dimensionnée pour être introduite dans l'orifice débouchant du boîtier. Au niveau de son extrémité libre, la collerette de raccord de l'actionneur est munie d'ergots de retenue assurant la retenue axiale de la collerette de raccord dans l'orifice. Les ergots de retenue sont guidés dans des rainures ménagées sur la paroi interne de l'orifice débouchant, lors de l'introduction de la collerette de raccord dans l'orifice débouchant. L'actionneur est alors fixé au boîtier en amenant la collerette en regard de l'orifice débouchant puis en donnant un mouvement de rotation à l'actionneur, jusqu'à ce que les ergots traversent l'orifice pour venir en appui contre la paroi interne du boîtier.

De tels moyens de fixation sont décrits dans le brevet GB 23 39 715, dans lequel un actionneur est fixé sur un boîtier logeant un organe mobile de type optique de phare de véhicule. Dans ce document, l'actionneur assure le réglage en hauteur des optiques de phares.

Les moyens de fixation mentionnés ci-dessus sont également utilisés dans le brevet US 4 768 545 pour fixer un actionneur sur un boîtier logeant un organe mobile du type volet d"entrée d'air pour appareil de climatisation. L'actionneur permet ici de faire passer le volet d'entrée d'air entre plusieurs positions, notamment entre une position permettant l'entrée d'air et une position interdisant l'entrée d'air.

Cependant, l'utilisation de l'orifice débouchant dans un boîtier commandé par un actionneur peut présenter de nombreux inconvénients.

Ainsi, dans les applications où le volume interne du boîtier est le siège d'une circulation d'air, par exemple dans les applications pour appareils de climatisation et de chauffage, il est nécessaire que l'orifice débouchant soit parfaitement clos et étanche afin d'éviter des fuites d'air vers l'extérieur. Pour cela, l'actionneur doit être équipé d'éléments d'étanchéité. Or, les contraintes de définition, de production et d'intégration de l'actionneur compliquent l'aménagement de tels éléments d'étanchéité.

Par ailleurs, dans des réalisations où l'actionneur n'entraîne pas directement l'organe mobile mais est équipé d'un levier qui assure un entraînement indirect, le levier est non seulement en interférence avec la collerette de raccord de l'actionneur mais aussi avec l'orifice débouchant. Pour limiter ces interférences, des aménagements sont généralement prévus. Cependant, ces aménagements sont particulièrement encombrants et compliquent le moulage des boîtiers. Ils ne sont en outre pas applicables à tous les appareils de climatisation et de chauffage de véhicules.

L'orifice présente également l'inconvénient de générer un encombrement important dans le volume intérieur du boîtier, ce qui peut nuire à l'obtention de certaines performances, notamment dans les applications pour appareil de climatisation et de chauffage de véhicule HVAC, où l'organe mobile est constitué d'un volet d'obturation. Dans ces applications, la présence de l'orifice débouchant constitue donc une contrainte pour l'implantation de composants ou de formes à l'intérieur du boîtier, comme par exemple, l'implantation d'un radiateur, l'implantation de butées mécaniques de fin de course du volet d'obturation dans le boîtier, ou encore l'implantation d'une collerette pour guider en rotation les deux extrémités du volet d'obturation, à l'intérieur du boîtier. Le volume de l'orifice débouchant limite aussi la longueur des portées latérales du volet d'obturation, ce qui génère des problèmes d'étanchéité, ainsi que la section de passage d'air. Des interférences peuvent en outre apparaître entre l'organe mobile et les ergots de retenue de la collerette de raccord de l'actionneur.

L'invention a pour but de surmonter les inconvénients précités en proposant un dispositif de fixation d'un actionneur à un boîtier pour véhicule automobile, l'actionneur étant destiné à entraîner un organe mobile disposé à l'intérieur du boîtier. Le dispositif comporte des moyens de fixation pour solidariser l'actionneur sur le boîtier. Selon l'invention, ces moyens de fixation comprennent deux collerettes de raccord conjuguées, montées respectivement sur une face de raccord de l'actionneur et sur une face de raccord du boîtier, tandis que les collerettes de raccord sont propres à être assemblées selon un raccord de type mâle/femelle à l'extérieur dudit boîtier.

Le dispositif de fixation de l'invention offre.ainsi une fixation mécanique robuste entre le boîtier et l'actionneur, à l'extérieur du boîtier, qui garantit une bonne étanchéité et ne génère aucun problème d'encombrement dans le volume intérieur du boîtier.

Des caractéristiques optionnelles du dispositif de fixation de l'invention sont énoncées ci-après :
- Un support est interposé entre l'actionneur et le boîtier et comporte une face de raccord sur laquelle est montée la collerette de raccord.
- Les collerettes dé raccord sont conformées de sorte que l'actionneur vienne se raccorder au boîtier par un mouvement de translation dans la direction de l'arbre d'entraîhement vers l'intérieur du boîtier ou au support, suivi d'un mouvement de rotation jusqu'à une position d'arrêt prédéfinie.
- Les collerettes de raccord sont conformées de sorte à engendrer un mouvement de translation vers le boîtier lors du mouvement de rotation de l'actionneur.
- Les collerettes de raccord présentent des formes de raccordement hélicoïdales conjuguées sur au moins une partie de leur paroi, et les formes de raccordement de la collerette mâle comportent des rampes hélicoïdales discontinues.
- Le raccord entre les collerettes est de type baïonnette.
- Les moyens de fixation comportent en outre un dispositif d'arrêt adapté pour bloquer la rotation de l'actionneur par rapport au boîtier ou au support, dans la position d'arrêt.
- Le dispositif d'arrêt comprend une patte d'accrochage agencée sur l'actionneur et un mécanisme de retenue agencé sur la face de raccord du boîtier ou du support, la patte étant destinée à venir se fixer au mécanisme de retenue par clippage, lorsque l'actionneur atteint sa position d'arrêt.
- Le mécanisme de retenue comporte un élément de guidage et des éléments de retenue, l'élément de guidage étant conformé pour amener la patte d'accrochage sensiblement en regard de l'élément de retenue pendant le mouvement de rotation de l'actionneur et les éléments de retenue étant conformés pour se raccorder par clippage avec la patte d'accrochage, lorsque l'actionneur atteint sa position d'arrêt.
- La patte d'accrochage comporte une partie élastique, tandis que l'élément de guidage est conformé pour exercer une contrainte progressive sur la patte d'accrochage pendant le mouvement de rotation de l'actionneur, la partie élastique de la patte d'accrochage se relâchant lorsque la patte arrive sensiblement en regard des éléments de retenue.
- L'élément de guidage décrit un arc de cercle excentré par rapport à l'axe de rotation de l'actionneur.
- La patte d'accrochage s'étend dans un plan général sensiblement parallèle à la face de raccord sur laquelle elle est agencée.
- La patte d'accrochage s'étend dans un plan général sensiblement perpendiculaire à la face de raccord sur laquelle elle est agencée.
- Le dispositif d'arrêt comprend un plot de retenue, aménagé sur le boîtier ou le support, tandis que l'actionneur est adapté pour être vissé au plot de retenue, après assemblage de l'actionneur et du boîtier.
- Le dispositif de fixation comporte en outre un garde-fou disposé de manière à n'autoriser la connexion électrique de l'actionneur que lorsque sa rotation par rapport au boîtier est bloquée par le dispositif d'arrêt.
- Le dispositif de fixation comporte en outre un détrompeur comprenant trois sous-détrompeurs placés de sorte à former un arc de cercle, le centre de cet arc étant localisé par l'axe de rotation D de la collerette de l'actionneur, cette disposition en arc de cercle limitant le placement de l'actionneur par rapport au boîtier ou au support à un positionnement unique.
- Le dispositif comporte en outre au moins un premier moyen de stabilisation localisé entre un flanc de l'actionneur et un premier sous-détrompeur, ce premier moyen de stabilisation maintenant la patte d'accrochage de l'actionneur en contact contre une des parois de clippage constituant le mécanisme de retenue.
- Le premier moyen de stabilisation est solidaire, de l'actionneur ou du premier sous-détrompeur.
- Le dispositif comporte en outre au moins un deuxième moyen de stabilisation localisé entre la face de raccord de l'actionneur et la face de raccord du boîtier ou du support, ce deuxième moyen de stabilisation maintenant en contact au moins deux formes de raccordement hélicoïdales conjuguées.
- Le deuxième moyen de stabilisation est solidaire de l'actionneur ou de la face de raccord.
- Les moyens de fixation comprennent en outre deux ergots de retenue axiale sensiblement en forme de "L" agencés respectivement sur la face de raccord du boîtier ou du support et sur la face de raccord de l'actionneur, la forme en L de chaque ergot présentant une première branche s'étendant sensiblement perpendiculairement à la face de raccord correspondante et une deuxième branche sensiblement parallèle à la face de raccord correspondante, tandis que la deuxième branche de l'ergot du boîtier est conformée pour venir appuyer contre la deuxième branche de l'ergot de l'actionneur vers l'intérieur du boîtier, lorsque l'actionneur a atteint sa position d'arrêt.
- La collerette de raccord de l'actionneur est conformée de manière à obstruer au moins un orifice dans la face de raccord supportant la collerette conjuguée, l'orifice étant ménagé en périphérie, coté intérieur ou extérieur de ladite collerette conjuguée.
- La collerette de raccord de l'actionneur comprend des formes de raccordement hélicoïdales à la fois sur une face intérieure et sur une face extérieure de sa paroi ou sur une de ces faces de sa paroi.
- L'organe mobile présente un palier de raccord et l'actionneur présente un arbre d'entraînement, le palier de raccord étant conformé pour être raccordé à l'arbre d'entraînement de l'actionneur pendant la fixation des collerettes de raccord.
- L'arbre d'entraînement de l'actionneur et le palier de raccord de l'organe mobile sont coaxiaux par rapport à l'axe des collerettes de raccord.
- L'arbre d'entraînement de l'actionneur et le palier de raccord de l'organe mobile sont excentrés par rapport à l'axe des collerettes de raccord.
- Le palier présente une échancrure conformée de sorte que l'arbre d'entraînement de l'actionneur vienne s'emboîter radialement dans le palier à travers l'échancrure lorsque l'actionneur atteint sa position d'arrêt.
- L'arbre d'entraînement de l'actionneur présente une échancrure conformée de sorte à s'emboîter radialement dans le palier de raccord de l'organe mobile à travers l'échancrure lorsque l'actionneur atteint sa position d'arrêt.
- Le palier de l'organe mobile est excentré par rapport à l'arbre d'entraînement de l'actionneur, tandis que l'arbre d'entraînement de l'actionneur est relié au palier de l'organe mobile par une cinématique d'entraînement indirect.
- La cinématique d'entraînement indirect comprend une bielle articulée sur l'arbre d'entraînement de l'actionneur par un premier levier et sur le palier de l'organe mobile par un deuxième levier, tandis que les collerettes de raccord de l'actionneur et du boîtier ou du support présentent chacune une échancrure sur leur paroi, conformée pour laisser passer le premier levier à travers les collerettes.
- Le levier est conformé pour obstruer au moins un orifice ménagé en périphérie et du coté intérieur de la collerette de raccord implantée sur la face de raccord du boîtier ou du support.
- L'actionneur présente un arbre d'entraînement à double extrémité dont la première extrémité est localisée du même coté que la collerette de raccord, et la deuxième extrémité du coté opposé par rapport au corps de l'actionneur à cette collerette de raccord.
- les extrémités de l'arbre d'entraînement peuvent être indifféremment de type mâle ou femelle.
- Un arbre d'entraînement de l'actionneur entraîne à la fois au moins une cinématique d'entraînement indirect et/ou un organe mobile.
- La cinématique d'entraînement indirect comporte un moyen de liaison de sorte à relier ladite cinématique d'entraînement indirect à l'arbre d'entraînement de l'actionneur ou au palier de raccord de l'organe mobile ou à une autre cinématique d'entraînement indirect.
- La Collerette de raccord femelle présente au moins une lumière locale sur sa paroi.
- L'invention propose en outre une installation de climatisation et de chauffage comprenant un boîtier de circulation d'air dans lequel est logé un volet d'obturation, le volet d'obturation étant entraîné par un actionneur. L'installation comporte avantageusement un dispositif de fixation tel que défini ci-dessus, pour solidariser l'actionneur sur le boîtier.

D'autres caractéristiques et avantages de l'invention apparaîtront à l'examen de la description détaillée ci-après et des dessins annexés sur lesquels :
- la figure 1A est un schéma représentant un ensemble de boîtier/actionneur équipé du dispositif de fixation de l'invention ;
- la figure 1B est un schéma illustrant le mouvement de rotation imparti à l'actionneur pendant la phase d'assemblage ;
- la figure 2 est une vue en perspective de l'actionneur montrant sa face de raccord ;
- la figure 3 est une vue en perspective des moyens de fixation prévus sur le boîtier ;
- la figure 4 est une vue en perspective partielle de l'ensemble de boîtier/actionneur dans une première étape d'assemblage;
- la figure 5 est une vue en perspective partielle de l'ensemble de boîtier/actionneur dans une étape finale d'assemblage ;
- la figure 6 est une vue en perspective des moyens de fixation agencés sur le boîtier lorsque l'arbre d'entraînement de l'actionneur et l'axe d'entraînement de l'organe mobile sont excentrés par rapport à l'axe des collerettes ;
- la figure 7 est une vue en perspective de l'ensemble de boîtier-actionneur dans la forme de réalisation de la figure 6;
- la figure 8 est une vue en perspective des moyens de fixation agencés sur l'actionneur, dans la forme de réalisation de la figure 6;
- la figure 9 est une vue partielle en perspective de l'ensemble de boîtier/actionneur dans une forme de réalisation où l'arbre d'entraînement de l'actionneur est relié à l'axe d'entraînement de l'organe mobile par une cinématique d'entraînement indirecte.
- les figures 10 et 11 sont des vues en perspective respectives de l'actionneur et des moyens de fixation agencés sur le boîtier dans la forme de réalisation de la figure 9 ;
- la figure 12 est un schéma partiel de l'ensemble de boîtier/actionneur montrant une variante de réalisation de la patte d'accrochage de l'actionneur ;
- la figure 13 est un schéma en perspective l'ensemble de boîtier/actionneur montrant l'utilisation d'un vissage entre l'actionneur et le boîtier ;
- la figure 14 est un schéma partiel l'ensemble de boîtier/actionneur montrant l'utilisation d'ergots de retenues axiales;
- la figure 15 est un schéma d'une forme de réalisation du dispositif de fixation de l'invention, dans laquelle des lumières sont prévues sur la collerette femelle ; et
- la figure 16 est un schéma d'une forme de réalisation du dispositif de fixation de l'invention avec un garde-fou de sécurité.
- la figure 17 est un schéma illustrant un support monté entre le boîtier et l'actionneur.
- la figure 18 est un schéma illustrant un détrompeur.
- les figure 19 et 20 illustrent un premier moyen de stabilisation.
- la figure 21 illustre un mécanisme de retenue.
- la figure 22 représente un deuxième moyen de stabilisation.
- les figures 23 et 24 illustrent un boîtier muni d'orifices de démoulage.
- les figures 25 et 26 représentent une collerette de raccord munie de plusieurs formes de raccordement hélicoïdales.
- les figures 27, 28 et 29 illustrent l'invention avec un arbre d'entraînement femelle.
- La figure 30 illustre un autre mode de réalisation de l'invention.
- les figures 31 à 40 illustrent un mode de réalisation avec un actionneur comprenant un arbre d'entraînement à double extrémité.

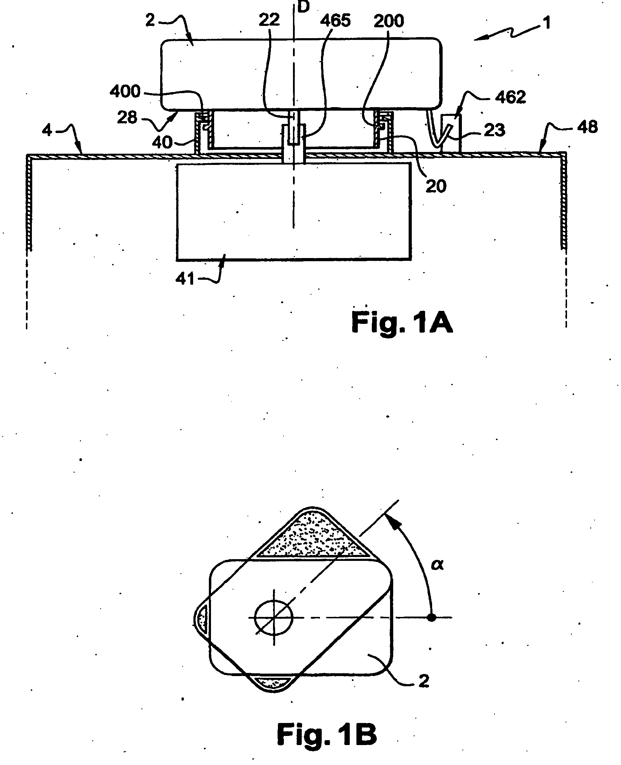

La figure 1A représente schématiquement un ensemble 1 de boîtier/actionneur comprenant un dispositif de fixation pour solidariser un actionneur 2 à un boîtier 4, selon l'invention. L'ensemble 1 comprend un boîtier 4 muni de parois qui définissent un volume intérieur, dans lequel est logé un organe mobile. L'organe mobile présente un arbre de rotation destiné à être entraîné par un actionneur externe 2.

Ici, et dans la suite de la description, les termes "intérieur", "extérieur" ou "externe" sont utilisés en référence aux parois du boîtier. En particulier, les éléments dits "intérieurs" sont disposés du côté de la paroi du boîtier où est logé l'organe mobile 41, tandis que les éléments dits "externes" ou "extérieurs" sont disposés de l'autre côté de la paroi.

L'actionneur 2 est constitué d'un moteur d'entraînement muni d'un arbre d'entraînement 22, s'étendant selon un axe D. L'arbre d'entraînement peut être en prise directe ou indirecte avec l'arbre de rotation de l'organe mobile 41.

L'ensemble 1 de l'invention peut comporter tout type d'actionneur, par exemple un actionneur électrique ou pneumatique.

Il est en particulier intéressant d'utiliser le dispositif de fixation de l'invention dans un véhicule, et tout particulièrement pour un appareil de chauffage et de climatisation de véhicule HVAC. Il est par exemple possible de mettre en oeuvre le dispositif de fixation de l'invention pour canaliser ou distribuer de l'air dans l'habitacle du véhicule. Par exemple, le boîtier 4 peut être une boîte d'admission d'air de l'appareil HVAC, reliée à une arrivée d'air et à une sortie d'air. La sortie d'air délivre un flux d'air à un pulseur placé en amont d'un échangeur de chaleur, par exemple un évaporateur. L'organe mobile 41 est alors un volet d'entrée d'air, interposé dans le boîtier pour réguler le débit d'air vers l'évaporateur. Le volet 41 est mis en rotation entre diverses positions permettant l'admission d'air externe, ou d'air recirculé et filtré provenant de l'habitacle, ou encore un mélange des deux. L'actionneur 2 régule la rotation du volet d'entrée d'air 41 entre ces positions. Toutefois, l'invention n'est pas limitée aux boîtiers d'air d'admission logeant un volet d'entrée d'air d'un appareil HVAC. Elle s'applique également à tout volet d'obturation de l'appareil HVAC, logé dans un boîtier de circulation d'air.

Dans la suite de la description, il sera fait référence à un organe mobile 41 du type volet d'obturation pour appareil HVAC, à titre d'exemple non limitatif.

L'invention prévoit des moyens de fixation externes pour solidariser l'actionneur 2 sur le boîtier 4, garantissant à la fois une retenue radiale et axiale de l'actionneur 2 après assemblage, ainsi que la liaison entre l'arbre d'entraînement 22 de l'actionneur 2 et l'arbre de rotation de l'organe mobile 41.

Comme représenté sur la figure 1A, les moyens de fixation comprennent une collerette de raccord 20 agencée sur une face de raccord 28 de l'actionneur 2 et une collerette de raccord 40 agencée sur la face de raccord 48 du boîtier 4. La collerette de raccord 40 du boîtier 4 s'étend à l'extérieur du boîtier et présente une forme conjuguée de la collerette de raccord 20 de l'actionneur.

Les collerettes de raccord 20 et 40 sont conformées pour être assemblées entre elles selon un raccord de type mâle/femelle à l'extérieur du boîtier.

Il n'est ainsi plus nécessaire de prévoir dans la paroi du boîtier une ouverture traversante de diamètre important. La paroi du boîtier ne présente plus qu'un orifice de très faible diamètre pour permettre la liaison entre l'arbre d'entraînement 22 de l'actionneur et l'arbre de rotation de l'organe mobile 41. L'étanchéité extérieure du boîtier est assurée par le palier du volet. Ainsi, le dispositif de fixation de l'invention ne présente pas les problèmes d'étanchéité rencontrés dans l'art antérieur, au niveau de la fixation entre le boîtier et l'actionneur.

Par ailleurs, comme la fixation entre l'actionneur 2 et le boîtier 4 est réalisée à l'extérieur du boîtier, l'occupation du volume intérieur du boîtier n'est conditionnée que par la forme de l'organe mobile 41. Il est donc possible d'intégrer des butées mécaniques très près de l'axe du boîtier pour imposer un arrêt en rotation du volet.

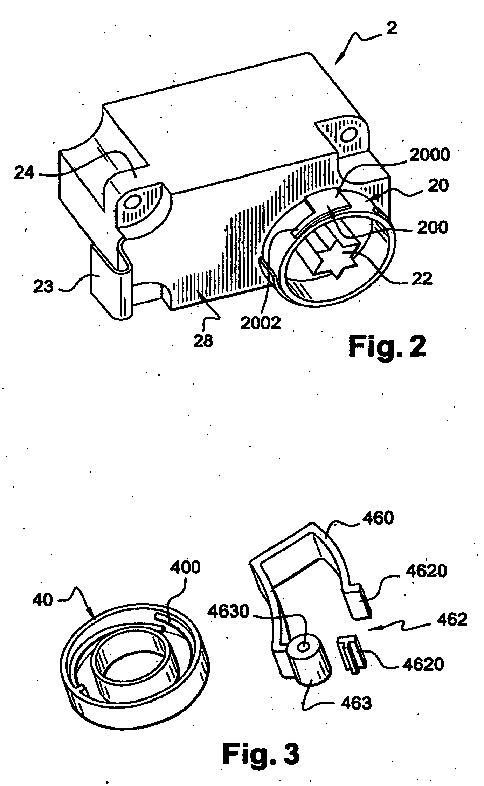

Il est maintenant fait référence aux figures 2 et 3 qui représentent différentes étapes de l'assemblage entre l'actionneur 2 et le boîtier 4.

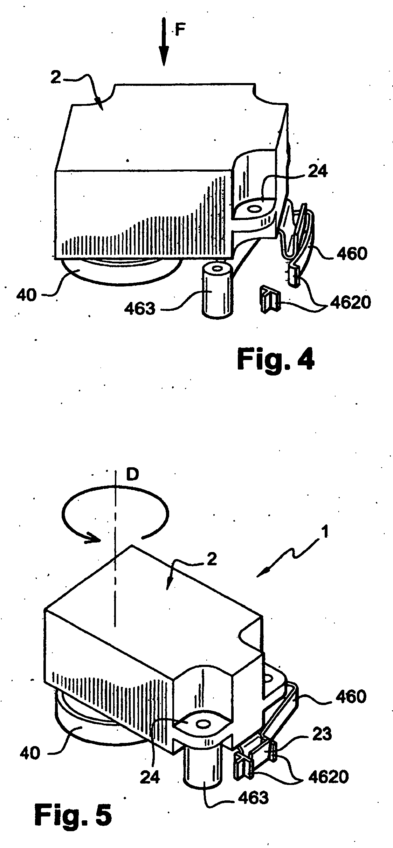

Les collerettes de raccord 20 et 40 sont conformées de sorte que l'actionneur vienne se raccorder au boîtier 4 d' abord par un mouvement de translation représenté sur la figure 4 dans la direction de l'arbre d'entraînement 22 de l'actionneur et vers l'intérieur du boîtier (Flèche F), puis par un mouvement de rotation jusqu'à une position d'arrêt prédéfinie, comme représenté sur la figure 3.

Le mouvement de translation suivant la flèche F est imparti à l'actionneur pour mettre en contact la collerette mâle avec la collerette femelle. En outre, dans cette étape initiale d'assemblage, l'arbre d'entraînement vient en prise avec le palier 465 de l'organe mobile 41.

Pendant le mouvement de rotation imparti à l'actionneur, la collerette de raccord mâle évolue dans la collerette de raccord femelle, jusqu'à ce que l'actionneur 2 atteigne sa position d'arrêt. Les collerettes de raccord sont alors emboîtées et bloquées axialement l'une par rapport à l'autre.

Les moyens de fixation coopèrent ainsi pour transformer le mouvement de rotation de l'actionneur 2 en un mouvement de translation vers le boîtier, à l'issu duquel les collerettes sont en prises. Les collerettes de raccord 20, 40 sont donc conformées de sorte à engendrer un mouvement de translation vers le boîtier 4 lors du mouvement de rotation de l'actionneur 2. Le raccord entre les collerettes 20 et 40 est tel qu'elles assurent la retenue axiale de l'actionneur 2 par rapport au boîtier 4, après assemblage.

L'invention permet de définir un angle de rotation α assez faible pour l'assemblage de l'actionneur 2 au boîtier 4, ce qui tout particulièrement intéressant dans les applications pour appareils HVAC. En effet, dans les applications HVAC, les boîtiers d'air supportent généralement un nombre assez important d'actionneurs sur une même face, et par conséquent, l'espace libre autour d'un actionneur donné est assez réduit. De manière générale, l'invention, est tout particulièrement adaptée aux applications où la face de raccord 48 du boîtier est encombrée, par exemple par l'utilisation de nombreux actionneurs ou de rainures de renfort. La position d'arrêt de l'actionneur 2 peut être en particulier définie pour que l'actionneur décrive sensiblement un angle α de 15° à 60°, comme représenté sur la figure 1B. Sur la figure 1B, l'actionneur 2 est représenté dans sa position initiale avant rotation (forme non grisée) et dans sa position d'arrêt après rotation (forme grisée).

Les collerettes de raccord 20 et 40 présentent des formes de raccordement hélicoïdales conjuguées 200 et 400 sur au moins une partie de leur paroi externe. Les formes de raccordements hélicoïdales de la collerette mâle 20 se présentent notamment sous forme de rampes hélicoïdales discontinues.

Les formes hélicoïdales conjuguées prévues sur la collerette mâle 20 et sur la collerette femelle 40 sont conformées pour venir en contact entre elles, pendant la phase initiale d'assemblage de la figure 4, et pour guider le mouvement de rotation de l'actionneur 2 par rapport au boîtier jusqu'à la position d'arrêt. Dans la position d'arrêt, la collerette mâle est emboîtée dans la collerette femelle et retenue axialement dans celle-ci. Les collerettes 20 et 40 garantissent ainsi la retenue axiale de l'actionneur 2 par rapport au boîtier 4.

Il est en particulier avantageux de prévoir la partie femelle sur le boîtier 4 et la partie mâle sur l'actionneur 2 pour permettre le démoulage de la surface de la collerette 40 du boîtier au moyen d'une broche animée en rotation et en translation, implantée dans le sens de démoulage du boîtier, ainsi que le démoulage de la surface de la collerette 20 de l'actionneur au moyen d'une broche animée en rotation et en translation, de faible taille et d'encombrement réduit.

La description qui suit sera donc faite en référence à des moyens de fixation comportant une collerette femelle 40 sur le boîtier 4 et une collerette mâle 20 sur l'actionneur 2, à titre d'exemple non limitatif.

Dans une forme de réalisation particulière, le raccord entre la collerette de l'actionneur 20 et la collerette 40 du boîtier peut être un raccord de type vis/écrou.

Dans cette forme de réalisation, comme montré sur les figures 2 et 3, la collerette mâle présente un filet mâle constitué de formes hélicoïdales saillantes sur une partie au moins de sa paroi externe, tandis que la collerette femelle présente un filet femelle conjugué de celui de la collerette mâle, sur une partie au moins de sa paroi interne.

Comme indiqué ci-dessus, le filet de la collerette mâle 20 peut être constitué de rampes hélicoïdales discontinues sur une partie de sa paroi externe. Ainsi, par exemple, sur la figure 2, la collerette mâle 20 présente trois rampes hélicoïdales 200 distantes radialement d'environ 120E. Chaque rampe hélicoïdale est constituée d'une forme saillante comprenant une partie sensiblement rectangulaire 2000 partant de la base de la collerette surmontée d'un bras 2002 s'étendant radialement et dépassant d'un côté de la base rectangulaire. Le bras 2002 est en outre légèrement incliné vers l'extrémité libre de la collerette 20. L'inclinaison du bras 2002 de la collerette mâle 20, permet de rapprocher l'actionneur 2 du boîtier 4 pendant la phase de rotation de l'actionneur.

La collerette femelle présente sur sa paroi interne un filet femelle conjugué de celui de la collerette mâle, conformé pour permettre l'insertion de la collerette mâle dans la collerette femelle par un mouvement de rotation de l'actionneur d'angle α, et la retenue axiale de la collerette mâle dans la collerette femelle, après insertion. Le filet femelle est en particulier discontinu et disposé sur une partie au moins de la paroi interne de la collerette femelle 40.

La fixation des collerettes 20 et 40 par.un raccord de type vis/écrou est particulièrement avantageuse pour la réalisation des moules du boîtier. Toutefois, l'invention n'est pas limitée à ce type de raccord entre les collerettes.

En variante, les collerettes de raccord 20, 40 peuvent être conformées pour être fixées entre elles par un raccord de type baïonnette. La paroi externe de la collerette mâle et la paroi interne de la collerette femelle comportent alors des formes de raccordement sensiblement parallèles entre elles assurant la retenue axiale de la fixation.

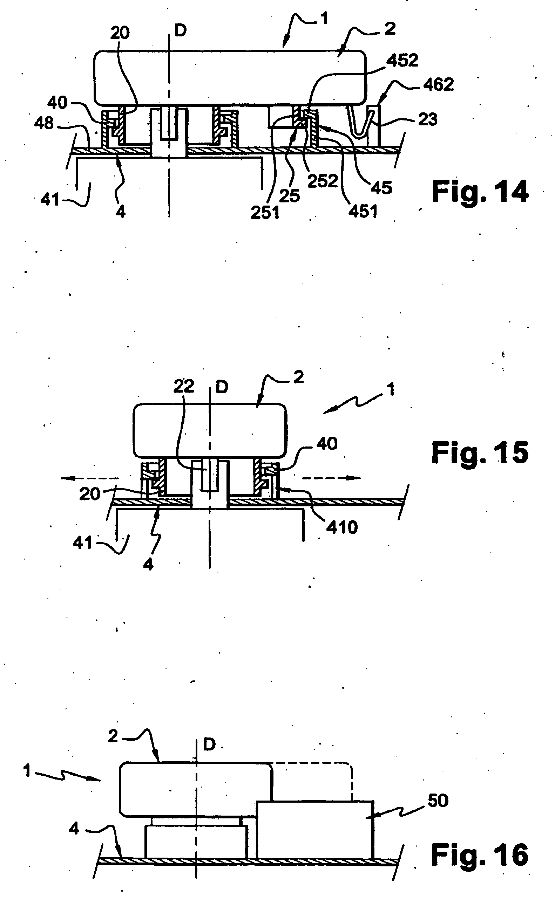

Dans cette variante de réalisation, des lumières locales 410, représentées sur la figure 16, peuvent être aménagées dans la collerette femelle 40 pour permettre un démoulage des formes de fixation à l'aide de coulisseaux animés en translation. Il n'est alors pas nécessaire d'utiliser un moule rotatif/translatif.

La suite de la description sera faite en référence à un raccord de type vis/écrou à titre d'exemple non limitatif.

Il est de nouveau fait référence à la figure 1A. Lors de la fixation des collerettes de raccord 20 et 40, la collerette mâle 20 vient s'emboîter dans la collerette femelle 40. Les axes respectifs des collerettes 20 et 40 coïncident alors, comme représenté par l'axe de fixation D.

La face de raccord 48 du boîtier présente un palier 465 relié à l'organe mobile 41. L'arbre d'entraînement 22 de l'actionneur vient en prise avec le palier 465 de l'organe mobile 41 pendant la phase d'assemblage de l'actionneur au boîtier suivant un axe de liaison d'entraînement D2.

L'axe de fixation D des collerettes peut être coaxial avec l'axe de la liaison d'entraînement D2, comme représenté sur la figure 1A. La collerette 20 de l'actionneur présente alors un axe qui coïncide avec l'axe de l'arbre d'entraînement 22. La collerette 40 du boîtier 4 présente quant à elle un axe coaxial avec l' axe du palier 465 de l'organe mobile 41. L'arbre d'entraînement 22 est ainsi entouré par la collerette 20 de l'actionneur et le palier 465 est entouré par la collerette 40 du boîtier.

Le raccord entre l'arbre d'entraînement 22 de l'actionneur 2 et le palier 465 du volet 41 se produit donc sensiblement dans la zone de fixation de l'actionneur 2 au boîtier 4.

Lorsque l'organe mobile 41 présente un axe de rotation coaxial avec l'axe du palier 465, celui-ci est alors coaxial avec l'axe D des collerettes. Dans cette configuration, le mouvement de rotation imparti à l'actionneur, illustré sur la figure 3, est réalisé autour de l'axe de rotation de l'organe mobile 41. Une telle forme de réalisation garantit un ajustement très précis de l'arbre d'entraînement de l'actionneur par rapport à l'axe de rotation du volet 41 tout en assurant un alignement précis de l'arbre d'entraînement 22 par rapport au volet 41.

Dans la phase initiale d'assemblage, représentée sur la figure 2, l'arbre d'entraînement 22 vient s'emboîter dans le palier 465 du volet 41, par coopération de formes, par exemple en "étoile", sensiblement simultanément à l'emboîtement des collerettes entre elles.

En variante, il est possible d'implanter l'axe de la liaison d'entraînement D2 indépendamment et à distance de l'axe de fixation D des collerettes. L'axe D2 et l'axe D sont alors excentrés.

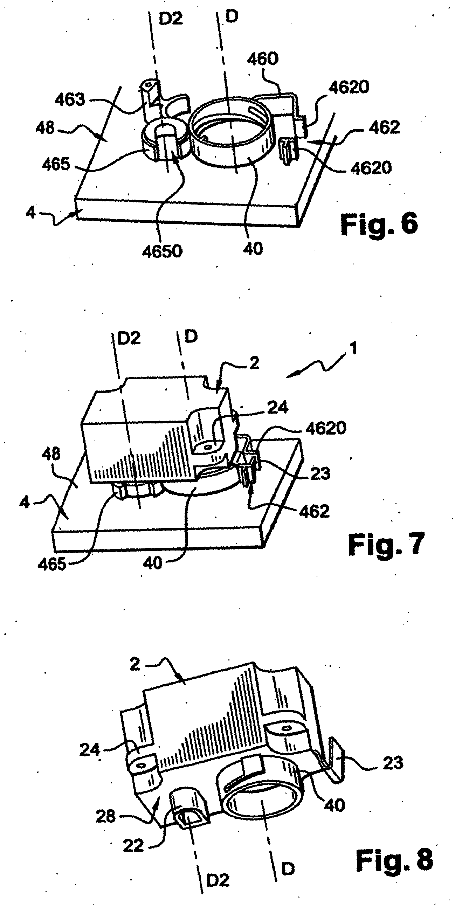

Cette variante de réalisation est représentée sur les figures 6 à 8 qui sont respectivement une vue de haut partielle du boîtier, une vue en perspective de l'ensemble de boîtier/actionneur de fixation, et une vue en perspective de l'actionneur 2.

Plus précisément, comme montré sur la figure 7, l'axe de la liaison d'entraînement selon l'axe D2 entre l'arbre d'entraînement 22 et le palier 465 est indépendant de l'axe de fixation D entre les collerettes 20 et 40, et excentré par rapport à celui-ci.

Ainsi, l'axe D de la collerette 40 du boîtier 4 est distant de l'axe D2 du palier 465 du volet, comme montré plus en détail sur la figure 6.

De même, l'axe D de la collerette 20 de l'actionneur 2 est distant de l'arbre d'entraînement 22, comme représenté sur la figure 8.

Dans cette variante de réalisation, le palier 465, représenté sur la figure 6, a une forme adaptée pour recevoir l'arbre d'entraînement 22 de l'actionneur selon un emboîtement radial, et non axial comme dans la forme réalisation où les axes D et D2 sont coaxiaux. Le raccord entre l'arbre d'entraînement 22 et le palier 465 du volet est réalisé par emboîtement radial lorsque l'actionneur 2 atteint sa position d'arrêt, à la fin du mouvement de rotation. Le palier 465 présente une échancrure 4650, à l'avant par rapport au sens de rotation de l'actionneur, pour permettre l'emboîtement radial. L'arbre d'entraînement 22 passe dans le palier par cette échancrure 4650, sensiblement à la fin du mouvement de rotation, pour venir en prise avec l'organe mobile 41.

Les moyens de fixation de l'invention comportent en outre un dispositif d'arrêt permettant de bloquer en rotation l'actionneur après assemblage.

Comme représenté sur les figures 2 et 3, ce dispositif d'arrêt comporte une patte d'accrochage 23, agencée sur la face de raccord 28 de l'actionneur 2. La patte 23 peut notamment présenter une partie élastique. Le dispositif d'arrêt comporte également des éléments de retenue 462 agencés sur la face de raccord 48 du boîtier, en correspondance avec la patte d'accrochage 23.

Comme représenté sur la figure 5, la patte d'accrochage est adaptée pour venir se clipper dans les éléments de retenue 462, lorsque l'actionneur 2 atteint sa position d'arrêt.

Les éléments de retenue 462 peuvent être constitués de deux parois de clippage 4620 de faible hauteur, perpendiculaires à la face de raccord 48 du boîtier et au plan général de la patte d'accrochage. Les parois de clippage 4620 sont espacées entre elles de manière à retenir la patte d'accrochage lorsque celle-ci est clippée entre elles.

La forme du filet 200 de la collerette mâle 20, représenté en détail sur la figure 2, et notamment l'inclinaison du bras 2002, est adaptée pour faire descendre la patte d'accrochage 23 dans sa butée, définie par les éléments de retenue 462, à la fin de la phase de rotation.

La patte d'accrochage 23 est en particulier repliée, comme montré notamment sur la figure 1A. Elle peut s'étendre dans un plan général perpendiculaire à la face de raccord 28 de l'actionneur 2.

La patte d'accrochage est par exemple repliée sensiblement à 18E de manière à définir deux faces parallèles, la patte 23 étant alors fixée à l'actionneur sur une de ses extrémités tandis que son autre extrémité est libre.

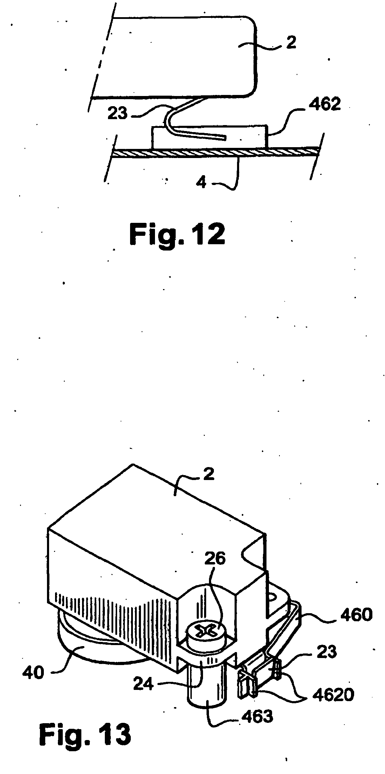

En variante, comme représenté sur la figure 12, la patte d'accrochage peut s'étendre dans un plan général parallèle à la face de raccord 28 de l'actionneur.

La forme et l'emplacement de la patte d'accrochage 23 et des éléments de retenue 462 ne sont pas limités à ceux décrits ci-dessus, à titre d'exemple non limitatif. En particulier, la patte élastique 23 peut former n'importe quel angle avec la face de raccord 28 de l'actionneur. Par ailleurs, en variante, la patte d'accrochage 23 peut être aménagée sur la face de raccord 48 du boîtier tandis que les éléments de retenue sont agencés sur la face de raccord 28 de l'actionneur 2.

En complément, le dispositif d'arrêt comporte un élément de guidage 460 décrivant, une courbe adaptée pour guider la patte d'accrochage vers les éléments de retenue 462, pendant le mouvement de rotation de l'actionneur.

Lorsque l'actionneur, 2 est inséré dans la collerette 40 du boîtier 2 initialement, la patte d'accrochage vient en contact avec l'élément de guidage 460. Ensuite, pendant le mouvement de rotation imparti à l'actionneur, la patte d'accrochage 23 est guidée vers les éléments de retenue 462 pour s'y clipper.

Dans les formes de réalisation où la patte d'accrochage 23 comporte une partie élastique, l'élément de guidage 460 peut être conformé pour exercer une précontrainte progressive sur la patte d'accrochage 23, jusqu'à ce que la patte d'accrochage arrive au niveau des éléments de retenue 462. Dans cette position, la patte d'accrochage 23 et l'élément de guidage ne sont plus en contact: la patte 23 se relâche alors pour se clipper aux éléments de retenue 462.

L'élément de guidage 460 peut avoir la forme d'un arc de cercle, excentré par rapport à l'axe de rotation de l'actionneur 2 pour pouvoir exercer une précontrainte sur sa partie élastique pendant la rotation de l'actionneur. Il peut de plus présenter une rainure de guidage pour permettre le guidage de la patte d'accrochage. Ainsi, lorsque l'on insère axialement l'actionneur 2, la patte d'accrochage 23 entre dans la rainure de l'élément de guidage 460 sans forcer. Pendant la phase de rotation de l'actionneur, la partie élastique de la patte 23 subit alors une précontrainte progressive en raison de la forme de l'élément de guidage 460. La patte sort de la rainure de guidage lorsqu'elle arrive au niveau des éléments de retenue 462: sa partie élastique se relâche alors, se qui permet son clippage aux éléments de retenue 462.

L'une des parois de retenue 4620 peut notamment être formée à une extrémité de l'élément de guidage 460 par évidement de sa paroi, comme représenté sur les figures.

Le dispositif d'arrêt ainsi constitué forme alors une butée s'opposant à un mouvement de rotation hélicoïdale inverse de celui utilisé pour l'assemblage de l'actionneur 2 sur le boîtier 4. Ce dispositif d'arrêt bloque l'actionneur en rotation, et assure ainsi la retenue radiale de l'actionneur 4 par rapport au boîtier 2.

Le dispositif d'arrêt peut en outre comporter un vissage au niveau duquel l'actionneur 2 est vissé au boîtier 4, comme représenté sur la figure 13. Le dispositif d'arrêt comporte alors un plot 463 agencé sur la face 48 de raccord du boîtier. Le plot 463 présente un axe sensiblement perpendiculaire à la face de raccord 48 du boîtier et une ouverture de vissage 4630. Le plot est montré en détail sur la figure 3.

L'actionneur 2 est vissé au plot 463 à travers l'ouverture 4630. Une zone de raccord 24 munie d'une ouverture traversante peut être prévue sur l'actionneur pour être raccordée au plot 23. La zone 24 et le plot 23 sont vissés entre eux au moyen d'une vis 26, représentée sur la figure 13.

Ce vissage peut être utilisé seul ou en combinaison avec la patte d'accrochage 23 pour exercer une retenue radiale. Utilisé seul, il assure la retenue radiale de l'actionneur par rapport au boîtier. Utilisé en complément de la patte d'accrochage, il renforce la fixation entre l'actionneur et le boîtier, et la sécurise, ou la remplace en cas d'endommagement.

Les moyens de fixation peuvent en outre comporter des ergots de retenue axiale 25 et 45 conjugués, agencés respectivement sur l'actionneur 2 et sur le boîtier 4.

Chaque ergot de retenue 25 ou 45 est agencé sur la face de raccord correspondante 28 ou 48 et a sensiblement une forme de "L". Une première branche 250 ou 450 de la forme en L de chaque ergot 25 ou 45 est sensiblement perpendiculaire à la face de raccord correspondante 28 ou 48 de l'actionneur 2 ou du boîtier 4, et la deuxième branche 252 ou 452 de la forme en L est sensiblement parallèle à la face de raccord correspondante 28 ou 48.

L'ergot 25 de l'actionneur 2 est en particulier agencé entre la collerette 20 et la patte 23.

Les ergots de retenue 25 et 45 sont agencés de sorte que la deuxième branche 452 de l'ergot 45 du boîtier vienne appuyer contre la deuxième branche 252 de l'ergot 25 de l'actionneur, en direction du boîtier, lorsque l'actionneur est dans sa position d'arrêt. Les ergots de retenue 25 et 45 viennent maintenir l'actionneur pour éviter qu'il ne se place de biais, par exemple lorsqu'il est en position d'arrêt. Ils permettent ainsi de sécuriser davantage la retenue axiale.

Comme décrit ci-dessus, l'organe mobile 41 peut être entraîné directement par l'arbre d'entraînement 22 de l'actionneur 2. Dans ce cas, l'arbre d'entraînement 22 de l'actionneur et l'axe de rotation de l'organe mobile 41 sont coaxiaux.

En variante, l'invention est adaptée à un entraînement indirect de l'organe mobile 41 au moyen d'une cinématique de liaison appropriée. L'actionneur 2 est alors déporté sur le boîtier 4 par rapport à l'axe de rotation de l'organe mobile 41.

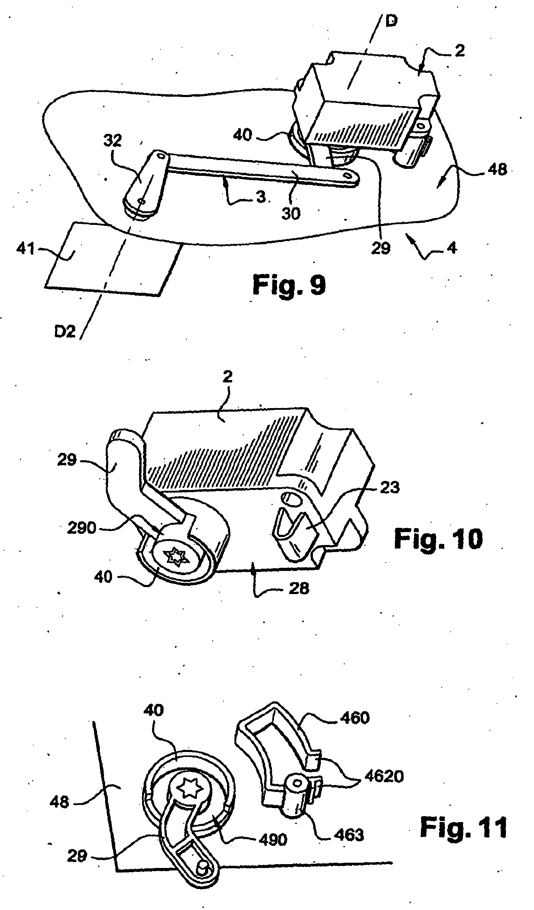

Les figures 9 à 11 représentent un exemple d'entraînement indirect de l'organe mobile 41 par l'actionneur 2. Dans la forme de réalisation représentée sur ces figures, la cinématique de liaison 3 entre l'actionneur et l'organe mobile est réalisée par une bielle 30, un premier levier 29 du côté de l'actionneur et un deuxième levier 32 du côté de l'organe mobile.

La figure 9 représente la cinématique d'entraînement 3 dans son ensemble, agencée à l'extérieur du boîtier 4. Le premier levier 29 est raccordé à l'actionneur tandis que le deuxième levier 32 est raccordé au palier 465 de l'organe mobile 41, le premier levier et le deuxième levier étant tous deux reliés à la bielle 30.

Dans cette forme de réalisation, l'arbre d'entraînement 22 est coaxial avec l'axe D de la collerette 20 tandis que l'axe D2 du palier 465 est agencé à distance de l'axe D. L'axe du palier coïncide avec l'axe de rotation de l'organe mobile 41, ici un volet.

Les figures 10 et 11 sont des vues respectives de l'actionneur 2 et de la face de raccord 48 du boîtier 4, dans cette forme de réalisation. Les collerettes 20 et 40 présentent chacune une échancrure 290 et 490 pour permettre le débattement du premier levier 29. Le premier levier 29 peut être relié en rotation à l'arbre 22 de l'actionneur 2 ou monté en translation sur celui-ci, par exemple par une liaison de forme étoilée. Le levier 29 traverse l'échancrure 290 prévue dans la paroi de la collerette 20.

La collerette 40 du boîtier 4 présente également une échancrure 490 pour laisser passer le premier levier 29, après assemblage des collerettes.

Dans cette forme de réalisation à entraînement direct, l'arbre d'entraînement 22 et l'axe des collerettes 20 et 40 peuvent être coaxiaux ou distants.

L'invention n'est pas limitée à ce type de cinématique de liaison pour un entraînement indirect de l'organe mobile. La cinématique de liaison peut par exemple se faire par mise en contact de deux pignons au niveau de l'échancrure des collerettes.

Les formes hélicoïdales des collerettes sont aménagées sur la partie non échancrée des parois des collerettes. Bien que cette forme échancrée des collerettes est particulièrement adaptée dans le cas d'un entraînement indirect de l'organe mobile 41, elle s'applique également dans les formes de réalisation à entraînement direct.

L'invention permet en outre d'intégrer un garde-fou d'assemblage permettant d'interdire la connexion électrique de l'actionneur si ce dernier n'a pas atteint sa position d'arrêt, comme représenté sur la figure 16. Cela permet de garantir que la patte d'accrochage 23 est bien clippée dans les éléments de retenue 462, avant d'enficher la prise électrique de l'actionneur.

Le garde-fou est donc disposé de manière à n'autoriser la connexion électrique de l'actionneur que lorsque la rotation de l'actionneur par rapport au boîtier est bloquée par le dispositif d'arrêt. La forme en pointillés représente l'actionneur dans sa position d'arrêt. En particulier, le garde-fou comprend un élément 50 placé de sorte que l'actionneur ne soit connecté électriquement que si la patte d'accrochage 23 est bien en prise avec les éléments de retenue 462, ce qui garantit que l'actionneur est dans sa position d'arrêt.

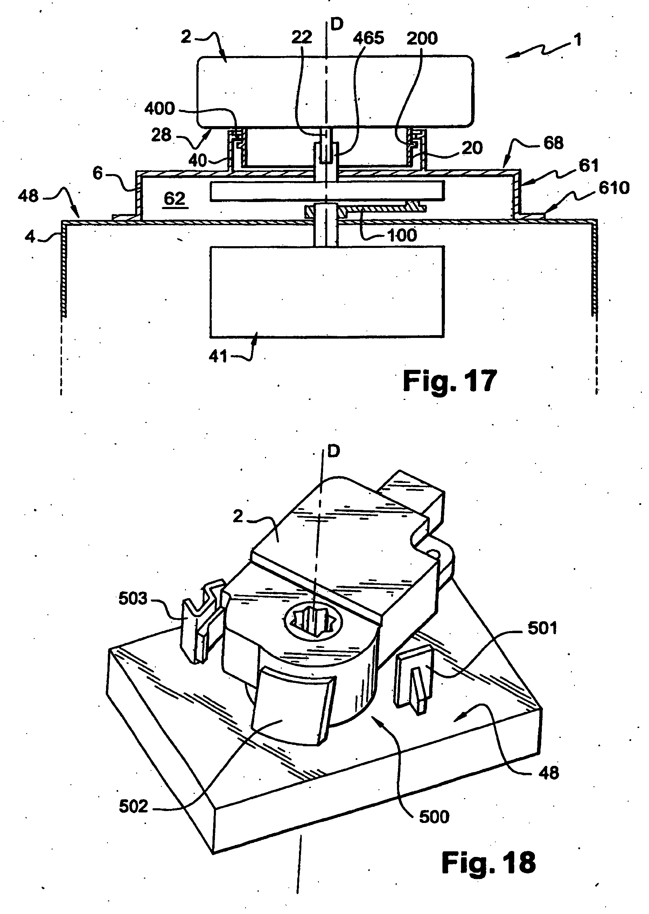

Selon un autre mode de réalisation illustré en figure 17, le boîtier 4 peut comporter sur sa face de raccord 48 un support 6. Le support 6 est interposé entre l'actionneur 2 et le boîtier 4 et comporte une face de raccord 68 sur laquelle est montée la collerette de raccord 40. Ce support 6 consiste en une platine intermédiaire comprenant une face de raccord 68 sur laquelle est monté l'actionneur 2. La face de raccord 68 comporte à chacune de ses extrémités un bord périphérique 61 en forme de « L » . Ainsi, le support 6 possède une forme générale en « U ». L'extrémité libre 610 du bord périphérique 61 est montée sur la face de raccord 48 du boîtier 4. Le support 6 comprend la collerette de raccord 40 coopérant avec la collerette de raccord 20 de l'actionneur 2. La collerette de raccord 20 et la collerette de raccord 40 sont conjuguées et sont propres à être assemblées selon un raccord de type mâle/femelle à l'extérieur du boîtier 4. Ce support 6 permet de former une cavité 62 entre la face externe de la face de raccord 48 du boîtier 4 et le côté de la face de raccord 68 du support 6 en regard de la face de raccord 48 du boîtier 4. Ainsi, cette cavité 62 permet de loger des mécanismes de liaison 100, tels qu'une cinématique d'entraînement, reliant l'actionneur 2 à l'organe mobile 41. D'une manière générale, le support 6 est un élément distinct du boîtier 4. La face de raccord 68 du support 6 peut remplacer la face de raccord 48 du boîtier 4, c'est-à-dire que tous les éléments se situant sur la face de raccord 48 du boîtier 4, tels que décrits aux figures 1 à 16, peuvent se situer sur la face de raccord 68 du support 6 lorsque ce dernier est utilisé. De ce fait, tous les éléments supportés par la face de raccord 48 du boîtier 4 peuvent être supportés par la face de raccord 68 du support 6. Tous les modes de réalisation décrits précédemment et ci-après peuvent comprendre soit la face de raccord 48 du boîtier 4 soit la face de raccord 68 du support 6. Ce support 6 est utilisé principalement lorsque l'actionneur 2 doit commander plusieurs organes mobiles 41, ces derniers étant découplés les uns des autres. Autrement dit, le support 6 est utilisé lorsque plusieurs organes mobiles 41 suivent une loi de cinématique de distribution commandée par un unique actionneur 2.

Selon une variante de l'invention, représentée en figure 18, le dispositif de fixation 1 comprend en outre un détrompeur 500 interdisant toute insertion non conforme de l'actionneur 2 sur la face de raccord 48 du boîtier 4. Ce détrompeur 500 a pour fonction d'empêcher lors du montage de l'actionneur 2 sur la face de raccord 48 du boîtier 4, c'est-à-dire lors du mouvement de translation de l'actionneur vers le boîtier 4, de positionner l'actionneur 2 d'une mauvaise manière. Ce détrompeur 500 permet ainsi au monteur de détecter, avant la phase de rotation de l'actionneur 2, si ce dernier est correctement mis en place. Autrement dit, le détrompeur 500 est disposé de sorte qu'un positionnement unique de l'actionneur 2 par rapport au boîtier 4 ou au support 6 existe. Le détrompeur 500 comprend au moins trois sous-détrompeurs 501, 502, 503 distincts et complémentaires, un premier sous-détrompeur 501 faisant également office de butée de fin de course lors de la phase de rotation de l'actionneur 2, un second sous-détrompeur 502 et un troisième sous-détrompeur 503. Les trois sous-détrompeurs 501, 502, 503 sont placés de sorte à former un arc de cercle, le centre de cet arc étant localisé par l'axe de rotation D de la collerette 20 de l'actionneur 2, cette disposition en arc de cercle limitant le placement de l'actionneur (2) par rapport au boîtier (4) ou au support (6) à un positionnement unique. Plus précisément, le premier sous-détrompeur 501 est sensiblement diamétralement opposé au troisième sous-détrompeur 503 par rapport à l'axe D. Le deuxième sous-détrompeur 502 est situé de sorte que le détrompeur 500 forme un demi-cercle d'axe D. L'élément de retenue 462 et l'élément de guidage 460 jouent le rôle du troisième sous-détrompeur 503. Les trois sous-détrompeurs sont complémentaires puisque l'absence d'un seul de ces trois sous-détrompeurs permet d'avoir le choix entre au moins deux positions différentes de montage. Chacun de ces sous-détrompeurs est monté sur la face de raccord 48 du boîtier 4 et s'étend perpendiculairement à cette face de raccord 48.

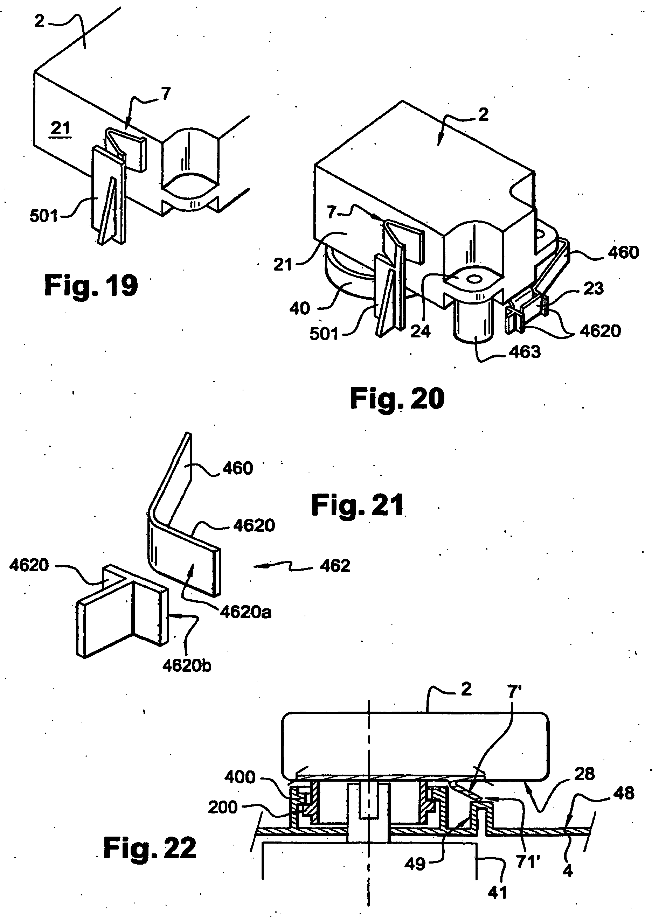

Illustré en figure 19 et 20, le dispositif de fixation 1 comprend en outre un premier moyen de stabilisation 7 sous forme d'une patte élastique. Ce premier moyen de stabilisation 7 se localise entre un flanc 21 de l'actionneur 2 et le premier sous-détrompeur 501 du détrompeur 500. Ce premier moyen de stabilisation 7 permet, lorsque l'actionneur 2 est dans sa position d'utilisation finale, c'est-à-dire sa position d'arrêt, de maintenir la patte d'accrochage 23 en contact contre une des parois de clippage 4620 constituant le mécanisme de retenue. Plus précisément, les parois de clippage 4620 de l' élément de retenue 462 espacées l'une de l'autre comportent chacune une face 4620a, 46.20b (figure 21). Ces deux faces sont en vis-à-vis l'une de l'autre, comme illustré aux figure 3 et 4. La face 4620a est celle de la paroi de clippage reliée au moyen de guidage 460. Le premier moyen de stabilisation 7 permet de maintenir la patte d'accrochage 23 en contact contre la face 4620a de la paroi de clippage 4620 reliée au moyen de guidage 460. De par ses propriétés élastiques, le premier moyen de stabilisation 7 permet ainsi d'éviter le déplacement de cet actionneur 2. Ce premier moyen de stabilisation 7 exerce également une force contre l'actionneur 2 de sorte que la patte d'accrochage 23 en appui contre la face 4620a de la paroi de clippage est soumise à une force selon un mouvement de rotation inverse à celui du montage. Ce premier moyen de stabilisation 7 peut être solidaire de l'actionneur 2 au niveau d'un flanc 21 (figure 19) ou solidaire du premier sous-détrompeur 501 (figure 20). Enfin, le dispositif de fixation 1 peut comprendre une pluralité de premier moyen de stabilisation 7.

En figure 22, un deuxième moyen de stabilisation 7' peut également se localiser entre la face de raccord 28 de l'actionneur 2 et la face de raccord 48 du boîtier 4. Dans cette variante, le deuxième moyen de stabilisation 7' est conformé de sorte à maintenir en contact les parois opposées des formes de raccordement hélicoïdales respectives de l'actionneur 2 et du boîtier 4. Les parois opposées sont les parties respectives des filets 200 et 400 permettant la retenue axiale de l'actionneur 2. Le deuxième moyen de stabilisation 7' permet de supprimer le déplacement axial de l'actionneur 2 par rapport au boîtier 4 du aux vibrations lors de l'utilisation de l'actionneur 2. La suppression de ce déplacement axial est garantie par les propriétés élastiques du deuxième moyen de stabilisation 7 qui permettent d'absorber les vibrations émises. Le deuxième moyen de stabilisation 7' est localisé entre la face de raccord 28 de l'actionneur 2 et la face de raccord 48 du boîtier 4 et peut être solidaire de la face de raccord 28 de l'actionneur 2 ou de la face de raccord 48, supportant la collerette de raccord 40. Dans le cas où le deuxième moyen de stabilisation 7' est solidaire de la face de raccord 28 de l'actionneur 2, l'extrémité libre 71' du deuxième moyen de stabilisation 7' est en appui contre un ergot 49 formé sur la face de raccord 48 du boîtier 4, cet ergot 49 s'étendant perpendiculairement à la face de raccord 48. Bien entendu, si le deuxième moyen de stabilisation 7' se situe sur la face de raccord 48, l'ergot 49 se localise sur la face de raccord 28 de l'actionneur 2. En outre, le deuxième moyen de stabilisation 7' peut être utilisé en combinaison du premier moyen de stabilisation 7. Le dispositif de fixation 1 peut également comprendre une pluralité de deuxième moyen de stabilisation 7'.

La description des figures 18 à 40 est basée sur un mode de réalisation comprenant la face de raccord 48 du boîtier 4. Cependant, l'invention comprend également les mêmes modes de réalisation réalisés avec la face de raccord 68 du support 6.

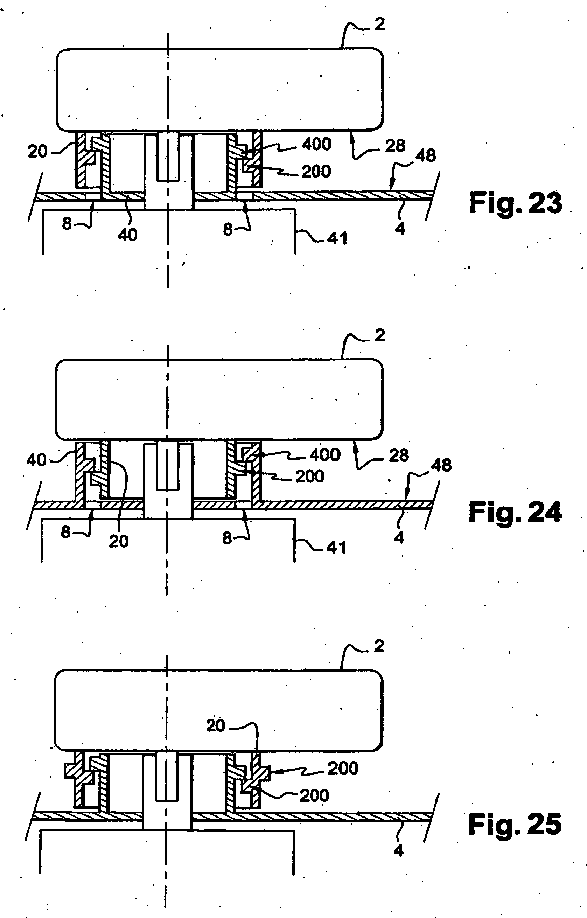

Afin de permettre une faciliter de démoulage du boîtier 4 lors de sa fabrication, il est nécessaire de prévoir des orifices 8 ménagés dans la face de raccord 48. Ces orifices 8 se localisent en périphérie de la collerette 40 du boîtier 4. Selon le type de la collerette 40, c'est-à-dire selon que cette collerette 40 soit mâle (figure 23) ou femelle (figure 24), les orifices 8 se localisent soit en périphérie externe de la collerette 40 mâle, soit en périphérie interne de la collerette 40 femelle du boîtier 4. Plus précisément, ces orifices 8 se répartissent au niveau d'une bande annulaire, externe ou interne selon le cas, entourant la collerette 40 du boîtier 4. En outre, les orifices 8 se situent au pied de la collerette 40, c'est-à-dire qu'ils sont ménagés dans la face de raccord 48 au plus près de la collerette 40. Pour démouler le boîtier 4, il suffit d'un seul orifice 8. Cependant une pluralité d'orifices 8 est plus avantageuse du point de vue de la facilité de démoulage du boîtier 4. Les orifices 8 présentent l'inconvénient de provoquer des fuites d'air. Pour pallier à cela, la collerette 20 de l'actionneur 2 est conformée de manière à obstruer au moins un orifice 8 dans la face de raccord 48 supportant la collerette 40 conjuguée, l'orifice 8 étant ménagé en périphérie, coté intérieur ou extérieur de ladite collerette conjuguée 40. Plus précisément, une fois l'actionneur 2 fixé sur le boîtier 4, c'est-à-dire lorsque l'actionneur 2 est dans sa position d'utilisation, les orifices 8 de la face de raccord 48 se localisent entre la collerette 20 et la collerette 40. Quel que soit le cas envisagé, c'est-à-dire que la collerette 40 soit mâle ou femelle, la collerette 20 est conformée de sorte à ce que les orifices 8 se localisent entre les deux collerettes 20 et 40 et se situent en regard des filets 200, 400 des formes de raccordement des collerettes 20, 40. Ainsi, les fuites d'air sont évitées par l'intermédiaire des formes de raccordement respectives des collerettes 20, 40 qui font office de joint d'étanchéité lorsqu'elles coopèrent entre elles pour fixer l'actionneur 2 au boîtier 4.

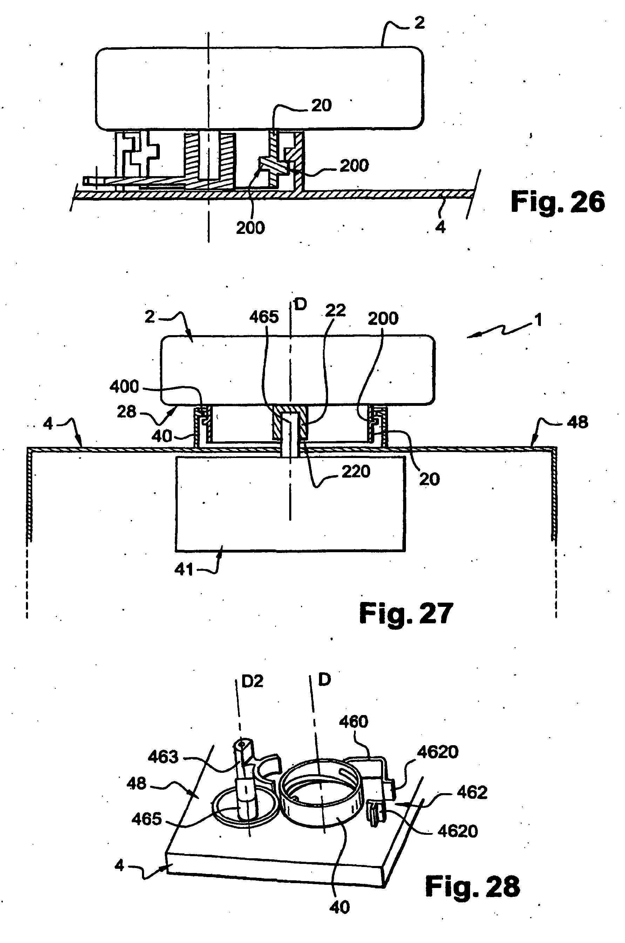

Aux figures 25 et 26, afin de réduire les coûts de production, la collerette 20 de l'actionneur 2 est conformée de sorte à pouvoir être utilisée soit comme collerette mâle soit comme collerette femelle. Ainsi, un seul et unique actionneur 2 peut être produit pour deux situations différentes (collerette mâle ou femelle). La collerette 20 de l'actionneur 2 comprend donc des formes de raccordement hélicoïdales 200 sur sa face interne et sur sa face externe de sa paroi. La forme de raccordement est la même, que ce soit sur la face interne ou sur la face externe de la paroi de la collerette 20 et correspond aux formes de raccordement hélicoïdales 200 décrit précédemment. En figure 25, la collerette 20 de l'actionneur 2 est utilisée comme collerette femelle. En figure 26, la collerette 20 est utilisée en tant que collerette mâle.

En figure 27, selon un autre mode de réalisation de l'invention représenté, l'actionneur 2 comporte un arbre d'entraînement 22 ayant son extrémité libre 220 de type femelle et l'organe mobile 41 comporte un palier de raccord 465 ayant son extrémité libre de type mâle, cette extrémité coopérant avec l'extrémité libre 220 de l'actionneur 2. Pour ce mode de réalisation, il existe plusieurs variantes.

La première variante correspond au cas où l'arbre d'entraînement 22 et le palier de raccord 465 sont coaxiaux par rapport aux axes des collerettes 20 et 40, c'est-à-dire par rapport à l'axe D. Cette première variante est illustrée en figure 27.

Selon une variante déjà illustrée en figures 6 et 8, le palier de raccord 465 de l'organe mobile 41 et l'arbre d'entraînement 22 de l'actionneur 2 sont excentrés par rapport à l'axe des collerettes de raccord 20 et 40. Selon cette variante, il est possible d'envisager deux sous-variantes.

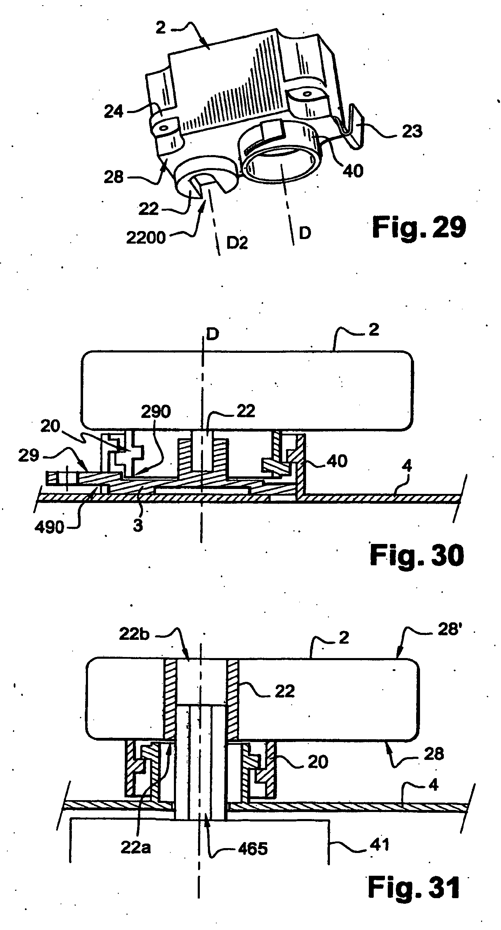

Pour la première sous-variante, comme représenté en figures 28 et 29, le palier de raccord 465 et l'arbre d'entraînement 22 sont coaxiaux par rapport à l'axe D2. Lorsque l'arbre d'entraînement 22 de l'actionneur 2 et le palier de raccord 465 de l'organe mobile 41 sont excentrés par rapport à l'axe D des collerettes et coaxiaux par rapport à l'axe D2, l'arbre d'entraînement 22 présente une échancrure 2200 conformée de sorte à s'emboîter radialement dans le palier de raccord 465 de l'organe mobile 41 à travers l'échancrure 2200 lorsque l'actionneur 2 atteint sa position d'arrêt. Cette échancrure 2200 est conformée de la même manière que l'échancrure 4650 illustrée à la figure 6.

Dans la deuxième sous-variante, comme représenté en figure 30, le palier de raccord 465 de l'organe mobile 41 est excentré par rapport à l'arbre d'actionnement 22 de l'actionneur 2 de sorte que l'arbre d'actionnement 22 de l'actionneur 2 est relié au palier de raccord 465 de l'organe mobile 41 par une cinématique d'entraînement 3. Cette cinématique d'entraînement 3 correspond à celle décrite à la figure 9. L'arbre d'actionnement 22 de l'actionneur 2 est coaxial avec les collerettes de raccord 20 et 40. De ce fait, la collerette 20 de l'actionneur 2 et la collerette 40 du boîtier 4 présentent chacune une échancrure 290, 490 sur leur paroi conformée pour laisser passer le premier levier 29 à travers les collerettes 20, 40. De préférence, le levier 29 est conformé pour obstruer un ou plusieurs orifices 8 ménagés en périphérie et du côté intérieur de la collerette de raccord implantée sur la face de raccord 48 du boîtier 4. Ceci permet d'éviter toute fuite d'air due aux orifices 8. Il est également possible que la collerette 20 de l'actionneur 2 soit de dimension plus courte que la collerette 40. Ainsi, l'échancrure 290 de la collerette 20 n'est plus nécessaire pour le passage du premier levier 29. On entend par « dimension plus courte » le fait que la collerette 20 possède une hauteur entre la face de raccord 28 de l'actionneur 2 et la face de raccord 48 plus courte que celle de la collerette 40.

En figure 31 à 34 est illustré un autre mode de réalisation
où l'actionneur 2 comprend un arbre d'entraînement 22 à deux extrémités dont une première extrémité 22a se localise du même côté que la collerette de raccord 20 et une deuxième extrémité 22b se localise du côté opposé à la collerette de raccord 20 par rapport au corps de l'actionneur 2. Un tel actionneur a double extrémité permet de commander deux organes mobiles 41 distincts et distants l'un de l'autre. La structure en double extrémité de l'actionneur 2 comprend une première ouverture au niveau de la face de raccord 28 de l'actionneur 2 dans laquelle est logée une première extrémité 22a de l'arbre d'entraînement 22. L'actionneur 2 comprend une deuxième ouverture localisée dans la face opposée 28' à la face de raccord 28 par rapport au corps de l'actionneur 2 dans laquelle est logée la deuxième extrémité 22b de l'arbre d'entraînement 22. La première ouverture et la deuxième ouverture sont coaxiales.

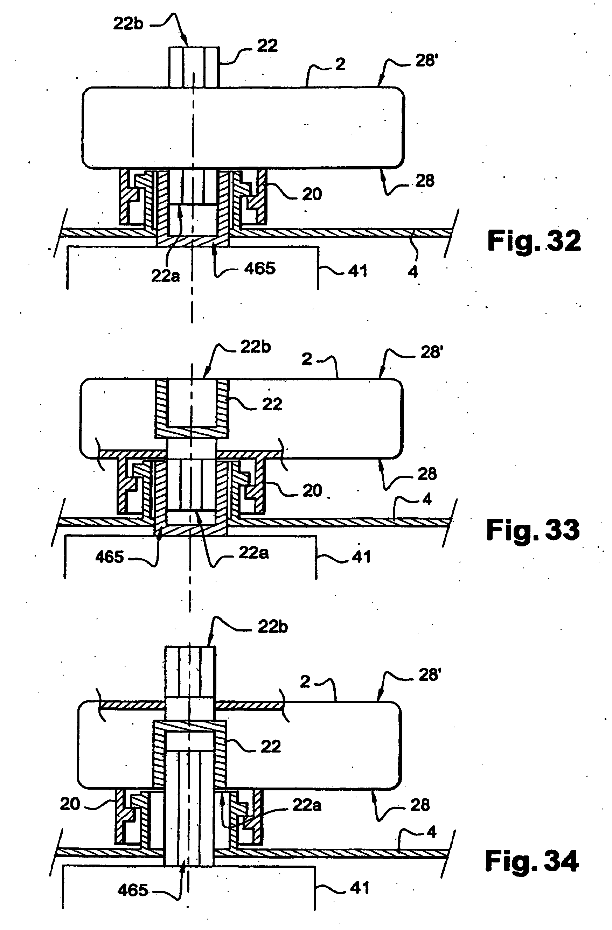

En outre, chacune des extrémités 22a, 22b peut être sous deux formes différentes : mâle ou femelle. Ainsi, l'arbre d'entraînement 22 peut avoir deux extrémités de type femelle (figure 31) ou deux extrémités de type mâle (figure 32) ou une extrémité mâle et une extrémité femelle (figure 33 et 34). Bien entendu, l'extrémité du palier de raccordement 465 de l'organe mobile 41 sera de type mâle ou femelle de sorte à coopérer avec l'extrémité 22a, 22b associée de l'arbre d'entraînement 22.

Lorsqu'une extrémité 22a, 22b est du type mâle, l'extrémité 22a, 22b de l'arbre d'entraînement 22 est en saillie par rapport à la face 28, 28' respective de l'actionneur 2. Lorsqu'une extrémité 22a, 22b est du type femelle, l'extrémité concernée de l'arbre d'entraînement 22 n'est pas en saillie par rapport à la face 28, 28' correspondante de l'actionneur 2.

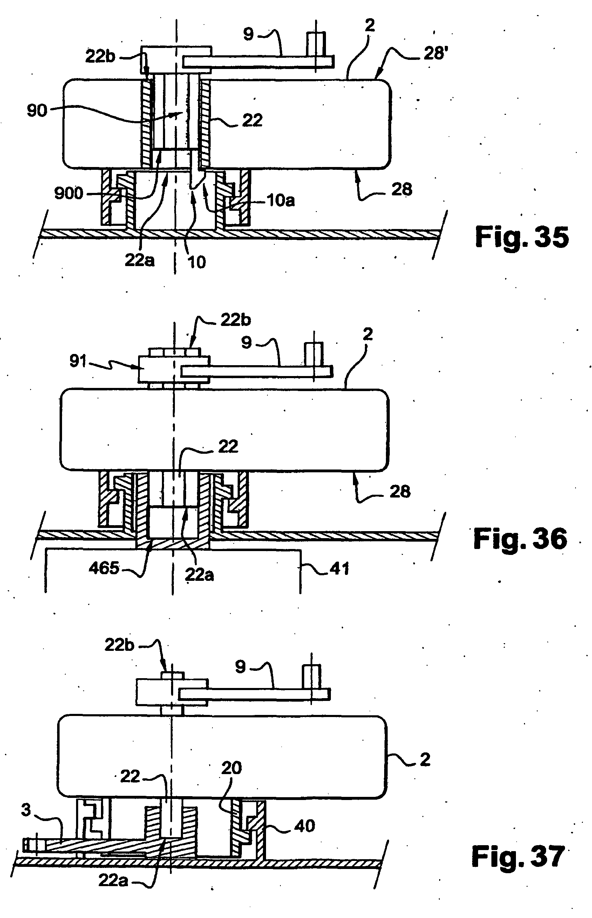

Les figures 31 à 34 illustrent les différentes configurations possibles des deux extrémités 22a, 22b. Dans ces configurations, l'arbre d'entraînement 22 est coaxial avec le palier de raccord 465 de l'organe mobile 41. En outre, on a représenté en figure 35 un mode de réalisation où les deux extrémités 22a et 22b sont de type femelle. Lorsque l'arbre d'entraînement 22 comporte deux extrémités 22a, 22b de type femelle, celui-ci est creux. Le fait que l'arbre d'entraînement 22 est creux permet, par exemple, à un palier de raccord de type mâle d'être introduit par l'extrémité 22b et d'être en saillie par rapport à l'extrémité 22a. Selon la figure 35, seule l'extrémité 22b est utilisée. Dans ce cas, l'organe mobile 41 non représenté est distant de l'actionneur 2 de sorte que son palier de raccord 465 non représenté soit excentré de l'arbre d'entraînement 22 de l'actionneur 2. Une cinématique d'entraînement indirect 9 relie l'extrémité 22b de l'arbre d'entraînement 22 au palier de raccord 465 de l'organe mobile 41. La cinématique d'entraînement indirect 9 comprend un arbre d'entraînement 90 coopérant avec l'arbre d'entraînement 22. L'extrémité 22b étant de type femelle, l'arbre d'entraînement 90 est conformé de sorte à être de type mâle. L'extrémité mâle 900 de l'arbre d'entraînement 90 comporte un moyen de liaison 10 permettant de fixer la cinématique d'entraînement indirect 9 à l'arbre d'entraînement 22 de l'actionneur 2. Ce moyen de liaison 10 permet une retenue axiale de l'arbre d'entraînement 90 de la cinématique d'entraînement indirect 9. Ce moyen de liaison 10 peut être sous la forme d'une languette. Par exemple, la languette, en saillie de la première extrémité 22a, est clippée au niveau de l'extrémité 22a de sorte à être en appui contre un rebord de cette extrémité 22a. Cette languette comporte deux extrémités dont l'une est fixé à ou venue de matière avec l'extrémité mâle 900 de l'arbre d'entraînement 90 de la cinématique 9. L'autre extrémité de la languette comporte une protubérance 10a qui est en appui contre l'extrémité 22a de l'arbre d'entraînement 22 de l'actionneur 2. Cette protubérance 10a est en saillie par rapport à l'extrémité 22a et par rapport à la face de raccord 28. Cette protubérance 10a permet une retenue axiale de l'arbre d'entraînement 90 par rapport à l'arbre d'entraînement 22 et ainsi empêche un déplacement axial de la cinématique d'entraînement indirecte 9. Ce moyen de clippage 10 sous forme de languette est un moyen peu coûteux de connecter ensemble la cinématique d'entraînement indirect 9 avec l'actionneur 2.

Les figures 36 et 37 représentent les modes de réalisation où les deux extrémités 22a et 22b sont de type mâle et sont toutes les deux utilisées, c'est-à-dire que l'arbre d'entraînement 22 de l'actionneur 2 entraîne à la fois soit deux cinématiques d'entraînement indirect 3, 9, soit une cinématique d'entraînement indirect 9 et un organe mobile 41. Dans ces cas, la cinématique d'entraînement indirect 9 comporte un moyen de liaison 91 de type femelle coopérant avec la deuxième extrémité 22b de l'arbre d'entraînement 22 de l'actionneur 2 pour relier l'arbre d'entraînement 22 à un organe mobile non représenté via la cinématique d'entraînement indirect 9.

En figure 36, le palier de raccord 465 de l'organe mobile 41 est coaxial avec l'arbre d'entraînement 22 de l'actionneur 2. Le palier; de type femelle, coopère avec la première extrémité 22a. Ce mode de réalisation permet de commander simultanément avec un unique actionneur 2 deux organes mobiles distincts et distants.

En figure 37, le mode de réalisation représente le cas où les deux organes mobiles non représenté, simultanément commandés par le même actionneur 2, sont distants l'un de l'autre et tous deux excentrés par rapport à l'actionneur 2. De ce fait, au niveau de la première extrémité 22a, une cinématique d'entraînement indirect 3 relie le palier de raccord 465 de l'organe mobile 41 à l'arbre d'entraînement 22 de l'actionneur 2. Comme dans les exemples précédents, les collerettes 20 et 40 présentent chacune une échancrure pour manoeuvrer cette cinématique d'entraînement indirect 3.

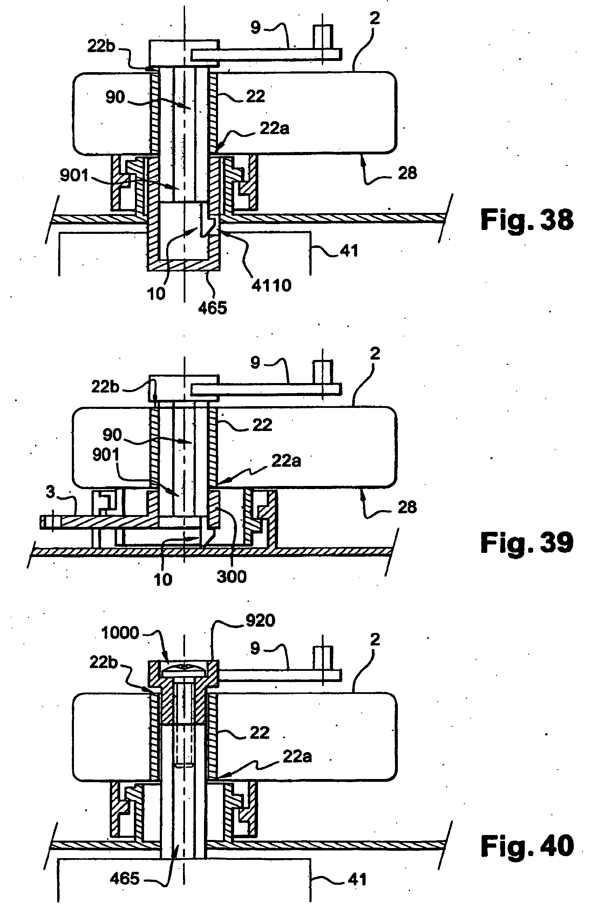

En figures 38 et 39, la première extrémité 22a et la deuxième extrémité 22b sont de type femelle et toutes les deux utilisées, le moyen de clippage 10 de la cinématique d'entraînement indirect 9 est en saillie au niveau de la première extrémité 22a de sorte à coopérer avec l'autre élément mis en rotation par l'arbre d'entraînement 22.

En figure 38, le palier de raccord 465 de l'organe mobile 41 est de type femelle de sorte à coopérer avec l'arbre d'entraînement 90 de la cinématique d'entraînement indirect 9. Ce palier de raccord 465 est coaxial avec l'arbre d'entraînement 90 et l'arbre d'entraînement 22. En outre, la fixation du palier de raccord 465 de l'organe mobile 41 à l'actionneur 2 est permise par la partie saillante 901 de l'arbre d'entraînement 90 de la cinématique d'entraînement indirect 9 par rapport à la face de raccord 28 et le moyen de liaison 10. Plus précisément, la partie saillante 901 de l'arbre d'entraînement 90 de la cinématique d'entraînement indirect 9 est la partie de l'arbre d'entraînement 90 en saillie par rapport à la face de raccord 28 et coopère avec le palier de raccord 465 de l'organe mobile 41. Le moyen de liaison 10 se clippe dans une trou 4110 de la paroi interne du palier de raccord 465. Ainsi, la cinématique d'entraînement indirect 9 et l'organe mobile 41 sont retenus axialement l'un par rapport à l'autre.

En figure 39, l'actionneur 2 commande simultanément deux organes mobiles non représentés distincts et tous deux excentrés de l'arbre d'entraînement 22 de l'actionneur 2. L'arbre d'entraînement 90 de la cinématique d'entraînement indirect 9 est en saillie par rapport à la face de raccord 28. Cet arbre d'entraînement 90 comporte au niveau de sa partie saillante 901 le moyen de liaison 10. La partie saillante 901 ainsi que le moyen de liaison 10 coopère avec une cinématique d'entraînement indirect 3. Plus précisément, la cinématique d'entraînement indirect 3 comporte une partie femelle 300 s'emmanchant dans la partie saillante 901 de l'arbre d'entraînement 22 et le moyen de liaison 10 se clippe au niveau de la partie femelle 300 de la cinématique d'entraînement indirect 3. Ainsi, la cinématique d'entraînement indirect 3 et la cinématique d'entraînement indirect 9 sont solidaires l'une de l'autre et sont retenues axialement l'une par rapport à l'autre.

On entend par « une extrémité 22a, 22b est utilisée » le fait qu'un élément tel qu'un palier de raccord d'un organe mobile ou une cinématique d'entraînement indirect coopère avec l'arbre d'entraînement 22 de l'actionneur 2 par l'intermédiaire de cette extrémité 22a, 22b.

En figure 40 est représenté une autre forme du moyen de liaison 10 de la cinématique d'entraînement indirect 9. Dans ce mode de réalisation, l'arbre d'entraînement 22 de l'actionneur 2 a ses deux extrémités 22a, 22b de type femelle. Ainsi, le palier de raccord 465 de type mâle de l'organe mobile 41 est inséré dans l'arbre d'entraînement 22 par l'intermédiaire de l'extrémité 22a. Le palier de raccord 465 ne traverse pas entièrement l'arbre d'entraînement 22 creux et n'est donc pas en saillie de l'extrémité 22b. La cinématique d'entraînement indirect 9 comporte à son extrémité un membre 920 s'insérant dans l'arbre d'entraînement 22 via l'extrémité 22b. Cet élément 920 est creux et conformé de sorte à pouvoir loger une vis 1000 à l'intérieur de sa paroi cylindrique. Cette vis 1000 permet de fixer solidairement le membre 920 de la cinématique d'entraînement indirect 9 avec le palier de raccord 465 de l'organe mobile 41.

L'invention n'est pas limitée aux formes de réalisation décrites ci-dessus. En particulier, elle englobe tout type de liaison d'entraînement entre l'actionneur et l'organe mobile. Ainsi, à la place d'un arbre d'entraînement 22 s'étendant à partir de la face de raccord 28 de l'actionneur, l'actionneur peut comporter en variante un axe d'entraînement percé dans sa paroi pour recevoir, dans le cas d'un entraînement direct, l'arbre de rotation de l'organe mobile 41, ou, dans le cas d'un entraînement indirect, le levier 29.

Dans le dispositif de fixation de l'invention, les moyens de fixation sont prévus à l'extérieur du boîtier, et ne font pas intervenir d'orifice débouchant. L'étanchéité est de plus assurée par le palier 465 de l'organe mobile 41. Par conséquent, le dispositif de fixation de l'invention ne présente pas de problèmes d'étanchéité, ou d'encombrement de volume intérieur du boîtier, contrairement aux réalisations de l'art antérieur.

Les moyens de fixation de l'actionneur au boîtier garantissent par ailleurs une retenue axiale et radiale efficace sans générer de contraintes de moulage complexe. Ils offrent donc une haute résistance mécanique.

En outre, l'axe du volet étant en contact direct avec le palier 465, il est possible de réaliser une intégration de butées mécaniques de fin de course du volet sur le boîtier, ainsi que le guidage du volet très près de l'axe du volet 41.

Par ailleurs, l'ensemble de boîtier actionneur de l'invention permet un moulage simple des moyens de fixation sur le boîtier 4 et sur l'actionneur 2 , Il n'est pas non plus nécessaire d'utiliser des coulisseaux de démoulage.

Le dispositif de fixation de l'invention autorise également la fixation de la cinématique de liaison, par exemple un levier, à l'extérieur du boîtier, dans le cas d'un entraînement indirect de l'organe mobile 41.

Le mouvement de rotation utilisé pour l'assemblage de l'actionneur 2 au boîtier 4 peut être de faible amplitude, ce qui est particulièrement utile lorsque plusieurs actionneurs sont implantés sur le boîtier. Il en découle en outre la possibilité d'implanter deux actionneurs à faible proximité l'un de l'autre, sur le boîtier.

Ainsi donc, l'invention offre une flexibilité d'implantation des actionneurs sur le boîtier, ce qui est particulièrement utile dans les véhicules automobile.

Dans les applications pour appareil de climatisation et de chauffage, l'invention permet en outre d'utiliser plusieurs actionneurs fixés sur un même boîtier au moyen du dispositif de fixation de l'invention. Dans ces applications, il peut être notamment avantageux de disposer les actionneurs sur le boîtier de sorte qu'ils aient tous le même sens de rotation.

## Revendications

1. Dispositif de fixation d'un actionneur (1) à un boîtier (4) pour véhicule automobile, l'actionneur (2) étant destiné à entraîner un organe mobile (41) disposé à l'intérieur du boîtier (4), le dispositif comportant des moyens de fixation pour solidariser l'actionneur sur le boîtier, **caractérisé en ce que** les moyens de fixation comprennent deux collerettes de raccord conjuguées (20, 40), montées respectivement sur une face de raccord (28) de l'actionneur et sur une face de raccord (48) du boîtier (4) et **en ce que** lesdites collerettes de raccord sont propres à être assemblées selon un raccord de type mâle/femelle à l'extérieur dudit boîtier (4).

2. Dispositif selon la revendication 1, **caractérisé en ce qu'**un support (6) est interposé entre l'actionneur (2) et le boîtier (4) et comporte une face de raccord (68) sur laquelle est montée la collerette de raccord (40).

3. Dispositif selon la revendication 1 ou 2, **caractérisé en ce que** les collerettes de raccord (20, 40) sont conformées de sorte que l'actionneur vienne se raccorder au boîtier (4) ou au support (6) par un mouvement de translation dans la direction de l'arbre d'entraînement vers l'intérieur du boîtier, suivi d'un mouvement de rotation jusqu'à une position d'arrêt prédéfinie.

4. Dispositif selon la revendication 3, **caractérisé en ce que** les collerettes de raccord (20, 40) sont conformées de sorte à engendrer un mouvement de translation vers le boîtier (4) lors du mouvement de rotation de l'actionneur (2).

5. Dispositif selon l'une des revendications précédentes, **caractérisé en ce que** les collerettes de raccord (20, 40) présentent des formes de raccordement hélicoïdales conjuguées sur au moins une partie de leur paroi, et **en ce que** les formes de raccordement de la collerette mâle (20) comportent des rampes hélicoïdales discontinues (200).

6. Dispositif selon l'une des revendications précédentes, **caractérisé en ce que** le raccord entre les collerettes (20, 40) est de type baïonnette.

7. Dispositif selon l'une des revendications précédentes, **caractérisé en ce que** les moyens de fixation comportent en outre un dispositif d'arrêt (462,23) adapté pour bloquer la rotation de l'actionneur par rapport au boîtier ou au support (6), dans la position d'arrêt.

8. Dispositif selon la revendication 7, **caractérisé en ce que** le dispositif d'arrêt comprend une patte d'accrochage (23) agencée sur l'actionneur et un mécanisme de retenue (462) agencé sur la face de raccord (48, 68) du boîtier (4) ou du support (6), ladite patte étant destinée à venir se fixer au mécanisme de retenue par clippage, lorsque l'actionneur atteint sa position d'arrêt.

9. Dispositif selon la revendication 8, **caractérisé en ce que** le mécanisme de retenue comporte un élément de guidage (460) et des éléments de retenue (462), l'élément de guidage étant conformé pour amener la patte d'accrochage (23) sensiblement en regard de l'élément de retenue (462) pendant le mouvement de rotation de l'actionneur (2) et les éléments de retenue (462) étant conformés pour se raccorder par clippage avec la patte d'accrochage (23), lorsque l'actionneur atteint sa position d'arrêt.

10. Dispositif selon la revendication 9, **caractérisé en ce que** la patte d'accrochage (23) comprend une partie élastique, et **en ce que** l'élément de guidage (460) est conformé pour exercer une contrainte progressive sur la patte d'accrochage (23) pendant le mouvement de rotation de l'actionneur (2), la partie élastique de la patte d'accrochage se relâchant lorsque la patte arrive sensiblement en regard des éléments de retenue (462).

11. Dispositif selon la revendication 10, **caractérisé en ce que** l'élément de guidage (460) décrit un arc de cercle excentré par rapport à l'axe de rotation de l'actionneur (2).

12. Dispositif selon l'une des revendications 8 à 11, **caractérisé en ce que** la patte d'accrochage (23) s'étend dans un plan général sensiblement parallèle à la face de raccord (28) sur laquelle elle est agencée.

13. Dispositif selon l'une des revendications 8 à 11, **caractérisé en ce que** la patte d'accrochage (23) s'étend dans un plan général sensiblement perpendiculaire à la face de raccord (28) sur laquelle elle est agencée.

14. Dispositif selon l'une des revendications 7 à 13, **caractérisé en ce que** le dispositif d'arrêt comprend un plot de retenue (463), aménagé sur le boîtier (4) ou le support (6), et **en ce que** l'actionneur (2) est adapté pour être vissé au plot de retenue, après assemblage de l'actionneur et du boîtier (4).

15. Dispositif selon l'une des revendications 7 à 14, **caractérisé en ce qu'**il comporte en outre un garde-fou (50) disposé de manière à n'autoriser la connexion électrique de l'actionneur que lorsque la rotation de l'actionneur (2) par rapport au boîtier (4) ou au support (6) est bloquée par le dispositif d'arrêt (462, 23).

16. Dispositif selon l'une des revendications précédentes, **caractérisé en ce qu'**il comporte en outre un détrompeur (500) comprenant trois sous-détrompeurs (501, 502, 503) placés de sorte à former un arc de cercle, le centre de cet arc étant localisé par l'axe de rotation D de la collerette 20 de l'actionneur 2, cette disposition en arc de cercle limitant le placement de l'actionneur (2) par rapport au boîtier (4) ou au support (6) à un positionnement unique.

17. Dispositif selon la revendication 16, **caractérisé en ce qu'**il comporte en outre au moins un premier moyen de stabilisation (7) localisé entre un flanc (21) de l'actionneur (2) et un premier sous-détrompeur (501), ce premier moyen de stabilisation (7) maintenant la patte d'accrochage (23) de l'actionneur (2) en contact contre une des parois de clippage (4620) constituant le mécanisme de retenue (462).

18. Dispositif selon la revendication 17, **caractérisé en ce que** le premier moyen de stabilisation (7) est solidaire de l'actionneur (2) ou du premier sous-détrompeur (501).

19. Dispositif selon l'une des revendications précédentes, **caractérisé en ce qu'**il comporte en outre au moins un deuxième moyen de stabilisation (7') localisé entre la face de raccord (28) de l'actionneur (2) et la face de raccord (48, 68) du boîtier (4) ou du support (6), ce deuxième moyen de stabilisation (7') maintenant en contact au moins deux formes de raccordement hélicoïdales conjuguées.

20. Dispositif selon la revendication 19, **caractérisé en ce que** le deuxième moyen de stabilisation (7') est solidaire de l'actionneur (2) ou de la face de raccord (48, 68).

21. Dispositif selon l'une des revendications précédentes, **caractérisé en ce que** les moyens de fixation comprennent en outre deux ergots de retenue axiale (25, 45) sensiblement en forme de "L" agencés respectivement sur la face de raccord (48, 68) du boîtier (4) ou du support (6) et sur la face de raccord (28) de l'actionneur, la forme en L de chaque ergot présentant une première branche (251,451) s'étendant sensiblement perpendiculairement à la face de raccord correspondante (28, 48, 68) et une deuxième branche sensiblement (252, 452) parallèle à la face de raccord correspondante, et **en ce que** la deuxième branche (452) de l'ergot du boîtier est conformée pour venir appuyer contre la deuxième branche (252) de l'ergot de l'actionneur vers l'intérieur du boîtier, lorsque l'actionneur a atteint sa position d'arrêt.

22. Dispositif selon l'une des revendications précédentes, **caractérisé en ce que** la collerette de raccord (20) de l'actionneur (2) est conformée de manière à obstruer au moins un orifice (8) dans la face de raccord (48, 68) supportant la collerette (40) conjuguée, l'orifice (8) étant ménagé en périphérie, coté intérieur ou extérieur de ladite collerette conjuguée (40).

23. Dispositif selon l'une des revendications précédentes, **caractérisé en ce que** la collerette de raccord (20) de l'actionneur (2) comprend des formes de raccordement hélicoïdales (200) à la fois sur une face intérieure et sur une face extérieure de sa paroi ou sur une de ces faces de sa paroi.

24. Dispositif selon l'une des revendications précédentes, **caractérisé en ce que** l'organe mobile (41) présente un palier de raccord (465) et l'actionneur présente un arbre d'entraînement (22), le palier de raccord étant conformé pour être raccordé à l'arbre d'entraînement de l'actionneur pendant la fixation des collerettes de raccord (20, 40).

25. Dispositif selon la revendication 24, **caractérisé en ce que** l'arbre d'entraînement (22) de l'actionneur (2) et le palier de raccord (465) de l'organe mobile (41) sont coaxiaux par rapport à l'axe des collerettes de raccord (20, 40).

26. Dispositif selon la revendication 25, **caractérisé en ce que** l'arbre d'entraînement (22) de l'actionneur et le palier de raccord (465) de l'organe mobile (41) sont excentrés par rapport à l'axe des collerettes de raccord.

27. Dispositif selon la revendication 26, **caractérisé en ce que** le palier (465) présente une échancrure (4650) conformée de sorte que l'arbre d'entraînement (22) de l'actionneur vienne s'emboîter radialement dans le palier à travers l'échancrure lorsque l'actionneur atteint sa position d'arrêt.

28. Dispositif selon la revendication 26, **caractérisé en ce que** l'arbre d'entraînement (22) de l'actionneur (2) présente une échancrure (2200) conformée de sorte à s'emboîter radialement dans le palier de raccord (465) de l'organe mobile, (41) à travers l'échancrure (2200) lorsque l'actionneur (2) atteint sa position d'arrêt.

29. Dispositif selon la revendication 24, **caractérisé en ce que** le palier (465) de l'organe mobile (41) est excentré par rapport à l'arbre d'entraînement (22) de l'actionneur (2), et **en ce que** l'arbre d'entraînement (22) de l'actionneur (2) est relié au palier (465) de l'organe mobile (41) par une cinématique d'entraînement indirect (3, 9).

30. Dispositif selon la revendication 29, **caractérisé en ce que** la cinématique d'entraînement indirect (3, 9) comprend une bielle (30) articulée sur l'arbre d'entraînement (22) de l'actionneur (2) par un premier levier (29) et sur le palier (465) de l'organe mobile par un deuxième levier (32), et **en ce que** les collerettes de raccord (20, 40) de l'actionneur (2) et du boîtier (4) ou du support (6) présentent chacune une échancrure (290, 490) sur leur paroi, conformée pour laisser passer le premier levier (29) à travers les collerettes (20, 40).

31. Dispositif selon la revendication 30, **caractérisé en ce que** le levier (29) est conformé pour obstruer au moins un orifice (8) ménagé en périphérie et du coté intérieur de la collerette de raccord (40) implantée sur la face de raccord (48, 68) du boîtier (4) ou du support (6).

32. Dispositif selon l'une des revendications précédentes, **caractérisé en ce que** l'actionneur (2) présente un arbre d'entraînement (22) à double extrémité (22a, 22b) dont la première extrémité (22a) est localisée du même coté que la collerette de raccord (20), et la deuxième extrémité (22b) du coté opposé par rapport au corps de l'actionneur 2 à cette collerette de raccord (20).

33. Dispositif selon la revendication 32, **caractérisé en ce que** les extrémités (22a, 22b) de l'arbre d'entraînement (22) peuvent être indifféremment de type mâle ou femelle.

34. Dispositif selon la revendication 32 ou 33, **caractérisé en ce qu'**un arbre d'entraînement (22) de l'actionneur (2) entraîne à la fois au moins une cinématique d'entraînement indirect (3, 9) et/ou un organe mobile (41).

35. Dispositif selon l'une quelconque des revendications 32 à 34, **caractérisé en ce que** la cinématique d'entraînement indirect (3, 9) comporte un moyen de liaison (10) de sorte à relier ladite cinématique d'entraînement indirect (3, 9) à l'arbre d'entraînement (22) de l'actionneur (2) ou au palier de raccord (465) de l'organe mobile (41) ou à une autre cinématique d'entraînement indirect (3, 9).

36. Dispositif selon l'une des revendications précédentes, **caractérisé en ce que** la collerette de raccord femelle (40) présente au moins une lumière locale (410) sur sa paroi.

37. Installation de climatisation et de chauffage comprenant un boîtier de circulation d'air (4) dans lequel est logé un volet d'obturation (41), le volet d'obturation étant entraîné par un actionneur (2), **caractérisé en ce qu'**elle comporte un dispositif de fixation selon l'une des revendications 1 à 36, pour solidariser l'actionneur sur le boîtier.

## Patentansprüche

1. Vorrichtung zur Befestigung eines Stellwerks (2) an einem Gehäuse (4) für ein Kraftfahrzeug, wobei das Stellwerk (2) dazu bestimmt ist, eine bewegliche Einrichtung (41) anzutreiben, die im Inneren des Gehäuses (4) angeordnet ist, wobei die Vorrichtung Befestigungsmittel umfasst, um das Stellwerk fest mit dem Gehäuse zu verbinden, **dadurch gekennzeichnet, dass** die Befestigungsmittel zwei einander zugeordnete Anschlussbünde (20, 40) umfassen, die jeweils auf einer Anschlussseite (28) des Stellwerks und auf einer Anschlussseite (48) des Gehäuses befestigt sind, und dadurch, dass die Anschlussbünde imstande sind, gemäß einem Anschluss der Art Innen-/Außengewinde im Äußeren des Gehäuses miteinander verbunden zu werden.

2. Vorrichtung nach Anspruch 1, **dadurch gekennzeichnet, dass** zwischen dem Stellwerk (2) und dem Gehäuse (4) eine Grundplatte (6) eingefügt ist, die eine Anschlussseite (68) umfasst, auf der der Anschlussbund (40) befestigt ist.

3. Vorrichtung nach Anspruch 1 oder 2, **dadurch gekennzeichnet, dass** die Anschlussbünde (20, 40) so ausgeführt sind, dass das Stellwerk mit dem Gehäuse (4) oder der Grundplatte (6) durch eine Verschiebungsbewegung in der Richtung der Antriebswelle hin zum Gehäuseinneren, gefolgt von einer Drehbewegung bis in eine vorausbestimmte Stoppposition verbunden wird.

4. Vorrichtung nach Anspruch 3, **dadurch gekennzeichnet, dass** die Anschlussbünde (20, 40) so ausgeführt sind, dass sie bei der Drehbewegung des Stellwerks (2) eine Verschiebungsbewegung hin zum Gehäuse (4) erzeugen.

5. Vorrichtung nach einem der vorhergehenden Ansprüche, **dadurch gekennzeichnet, dass** die Anschlussbünde (20, 40) zumindest auf einem Teil ihrer Wandung einander zugeordnete, schraubenförmige Verbindungsformen aufweisen, und dadurch, dass die Verbindungsformen des Außengewindebunds (20) unterbrochene, schraubenförmige Rampen (200) umfassen.

6. Vorrichtung nach einem der vorhergehenden Ansprüche, **dadurch gekennzeichnet, dass** die Verbindung zwischen den Bünden (20, 40) eine Art Bajonettverschluss ist.

7. Vorrichtung nach einem der vorhergehenden Ansprüche, **dadurch gekennzeichnet, dass** die Befestigungsmittel des Weiteren eine Stoppvorrichtung (462, 23) umfassen, die angepasst ist, um die Drehung des Stellwerks in Bezug auf das Gehäuse oder die Grundplatte (6) in der Stoppposition zu blockieren.

8. Vorrichtung nach Anspruch 7, **dadurch gekennzeichnet, dass** die Stoppvorrichtung eine Einhaklasche (23), die auf dem Stellwerk angeordnet ist, und einen Rückhaltemechanismus (462) umfasst, der auf der Anschlussseite (48, 68) des Gehäuses (4) oder der Grundplatte (6) angeordnet ist, wobei die Lasche dazu bestimmt ist, sich durch Einrasten am Rückhaltemechanismus zu befestigen, sobald das Stellwerk seine Stoppposition erreicht.

9. Vorrichtung nach Anspruch 8, **dadurch gekennzeichnet, dass** der Rückhaltemechanismus ein Führungselement (460) und Rückhalteelemente (462) umfasst, wobei das Führungselement ausgeführt ist, um die Einhaklasche (23) während der Drehbewegung des Stellwerks (2) im Wesentlichen gegenüber dem Rückhalteelement (462) anzuordnen, und wobei die Rückhalteelemente (462) ausgeführt sind, um sich durch Einrasten mit der Einhaklasche (23) zu verbinden, sobald das Stellwerk seine Stoppposition erreicht.

10. Vorrichtung nach Anspruch 9, **dadurch gekennzeichnet, dass** die Einhaklasche (23) einen elastischen Teil umfasst, und dadurch, dass das Führungselement (460) ausgeführt ist, um während der Drehbewegung des Stellwerks (2) eine progressive Spannung auf die Einhaklasche (23) auszuüben, wobei sich der elastische Teil der Einhaklasche lockert, sobald sich die Lasche im Wesentlichen gegenüber den Rückhalteelementen (462) befindet.

11. Vorrichtung nach Anspruch 10, **dadurch gekennzeichnet, dass** das Führungselement (460) einen Kreisbogen beschreibt, der in Bezug auf die Drehachse des Stellwerks (2) außermittig ist.

12. Vorrichtung nach einem der Ansprüche 8 bis 11, **dadurch gekennzeichnet, dass** sich die Einhaklasche (23) in einer allgemeinen Ebene erstreckt, die im Wesentlichen parallel zur Anschlussseite (28) verläuft, auf der sie angeordnet ist.

13. Vorrichtung nach einem der Ansprüche 8 bis 11, **dadurch gekennzeichnet, dass** sich die Einhaklasche (23) in einer allgemeinen Ebene erstreckt, die im Wesentlichen senkrecht zur Anschlussseite (28) verläuft, auf der sie angeordnet ist.

14. Vorrichtung nach einem der Ansprüche 7 bis 13, **dadurch gekennzeichnet, dass** die Stoppvorrichtung einen Rückhaltezapfen (463) umfasst, der auf dem Gehäuse (4) oder der Grundplatte (6) eingerichtet ist, und dadurch, dass das Stellwerk (2) angepasst ist, um nach dem Zusammenfügen von Stellwerk und Gehäuse (4) mit dem Rückhaltezapfen verschraubt zu werden.

15. Vorrichtung nach einem der Ansprüche 7 bis 14, **dadurch gekennzeichnet, dass** sie des Weiteren eine Brüstung (50) umfasst, die so angeordnet ist, dass sie den elektrischen Anschluss des Stellwerks nur dann zulässt, wenn die Drehung der Stellwerks (2) in Bezug auf das Gehäuse (4) oder die Grundplatte (6) von der Stoppvorrichtung (462, 23) blockiert wird.

16. Vorrichtung nach einem der vorhergehenden Ansprüche, **dadurch gekennzeichnet, dass** sie des Weiteren eine mechanische Codierungseinheit (500) umfasst, die drei Untercodierungseinheiten (501, 502, 503) aufweist, die so angeordnet sind, dass sie einen Kreisbogen bilden, wobei die Mitte dieses Kreisbogens von der Drehachse D des Anschlussbunds (20) des Stellwerks (2) dargestellt wird, wobei diese Kreisbogenanordnung die Platzierung des Stellwerks (2) in Bezug auf das Gehäuse (4) oder die Grundplatte (6) auf eine einzige Positionierung einschränkt.

17. Vorrichtung nach Anspruch 16, **dadurch gekennzeichnet, dass** sie des Weiteren zumindest ein erstes Stabilisierungsmittel (7) umfasst, das sich zwischen einer Seite (21) des Stellwerks (2) und einer ersten Untercodierungseinheit (501) befindet, wobei dieses erste Stabilisierungsmittel (7) die Einhaklasche (23) des Stellwerks (2) gegen eine der Einrastwandungen (4620), die den Rückhaltemechanismus (462) bilden, gedrückt hält.

18. Vorrichtung nach Anspruch 17, **dadurch gekennzeichnet, dass** das erste Stabilisierungsmittel (7) mit dem Stellwerk (2) oder der ersten Untercodierungseinheit (501) fest verbunden ist.

19. Vorrichtung nach einem der vorhergehenden Ansprüche, **dadurch gekennzeichnet, dass** sie des Weiteren zumindest ein zweites Stabilisierungsmittel (7') umfasst, das sich zwischen der Anschlussseite (28) des Stellwerks (2) und der Anschlussseite (48, 68) des Gehäuses (4) oder der Grundplatte (6) befindet, wobei dieses zweite Stabilisierungsmittel (7') zumindest zwei einander zugeordnete, schraubenförmige Verbindungsformen in Berührung hält.

20. Vorrichtung nach Anspruch 19, **dadurch gekennzeichnet, dass** das zweite Stabilisierungsmittel (7') mit dem Stellwerk (2) oder der Anschlussseite (48, 68) fest verbunden ist.

21. Vorrichtung nach einem der vorhergehenden Ansprüche, **dadurch gekennzeichnet, dass** die Befestigungsmittel des Weiteren zwei Nasen zur axialen Rückhaltung (25, 45) umfassen, die im Wesentlichen eine L-Form aufweisen und jeweils auf der Anschlussseite (48, 68) des Gehäuses (4) oder der Grundplatte (6) und auf der Anschlussseite (28) des Stellwerks angeordnet sind, wobei die L-Form jeder Nase einen ersten Schenkel (251, 451) aufweist, der sich im Wesentlichen senkrecht zur entsprechenden Anschlussseite (28, 48, 68) erstreckt, und einen zweiten Schenkel (252, 452), der sich im Wesentlichen parallel zur entsprechenden Anschlussseite erstreckt, und dadurch, dass der zweite Schenkel (452) der Nase des Gehäuses ausgeführt ist, um gegen den zweiten Schenkel (252) der Nase des Stellwerks in Richtung Gehäuseinneres gedrückt zu werden, sobald das Stellwerk seine Stoppposition erreicht.

22. Vorrichtung nach einem der vorhergehenden Ansprüche, **dadurch gekennzeichnet, dass** der Anschlussbund (20) des Stellwerks (2) so ausgeführt ist, dass er zumindest eine Öffnung (8) auf der Anschlussseite (48, 68), die den zugeordneten Anschlussbund (40) trägt, verschließt, wobei die Öffnung (8) am Rande innerhalb oder außerhalb des zugeordneten Anschlussbundes (40) eingerichtet ist.

23. Vorrichtung nach einem der vorhergehenden Ansprüche, **dadurch gekennzeichnet, dass** der Anschlussbund (20) des Stellwerks (2) sowohl auf einer Innenseite als auch auf einer Außenseite seiner Wandung oder auf einer dieser Seiten seiner Wandung schraubenförmige Verbindungsformen (200) aufweist.

24. Vorrichtung nach einem der vorhergehenden Ansprüche, **dadurch gekennzeichnet, dass** die bewegliche Einrichtung (41) ein Anschlusslager (465) und das Stellwerk eine Antriebswelle (22) aufweist, wobei das Anschlusslager ausgeführt ist, um während der Befestigung der Anschlussbünde (20, 40) an die Antriebswelle des Stellwerks angeschlossen zu werden.

25. Vorrichtung nach Anspruch 24, **dadurch gekennzeichnet, dass** die Antriebswelle (22) des Stellwerks (2) und das Anschlusslager (465) der beweglichen Einrichtung (41) in Bezug auf die Achse der Anschlussbünde (20, 40) koaxial sind.

26. Vorrichtung nach Anspruch 25, **dadurch gekennzeichnet, dass** die Antriebswelle (22) des Stellwerks und das Anschlusslager (465) der beweglichen Einrichtung (41) in Bezug auf die Achse der Anschlussbünde außermittig sind.

27. Vorrichtung nach Anspruch 26, **dadurch gekennzeichnet, dass** das Lager (465) eine Aussparung (4650) aufweist, die so ausgeführt ist, dass die Antriebswelle (22) des Stellwerks durch die Aussparung hindurch radial in das Lager einrastet, sobald das Stellwerk seine Stoppposition erreicht.

28. Vorrichtung nach Anspruch 26, **dadurch gekennzeichnet, dass** die Antriebswelle (22) des Stellwerks (2) eine Aussparung (2200) aufweist, die so ausgeführt ist, dass sie radial in das Anschlusslager (465) der beweglichen Einrichtung (41) durch die Aussparung (2200) einrastet, sobald das Stellwerk (2) seine Stoppposition erreicht.

29. Vorrichtung nach Anspruch 24, **dadurch gekennzeichnet, dass** das Lager (465) der beweglichen Einrichtung (41) in Bezug auf die Antriebswelle (22) des Stellwerks (2) außermittig ist, und dadurch, dass die Antriebswelle (22) des Stellwerks (2) mit dem Lager (465) der beweglichen Einrichtung (41) durch eine indirekte Antriebskinematik (3, 9) verbunden ist.

30. Vorrichtung nach Anspruch 29, **dadurch gekennzeichnet, dass** die indirekte Antriebskinematik (3, 9) eine Kolbenstange (30) umfasst, die über einen ersten Hebel (29) auf der Antriebswelle (22) des Stellwerks (2) und über einen zweiten Hebel (32) auf dem Lager (465) der beweglichen Einrichtung gelenkig gelagert ist, und dadurch, dass die Anschlussbünde (20, 40) des Stellwerks (2) und des Gehäuses (4) oder der Grundplatte (6) jeweils eine Aussparung (290, 490) auf deren Wandung aufweisen, die ausgeführt ist, um den ersten Hebel (29) durch die Anschlussbünde (20, 40) hindurch passieren zu lassen.

31. Vorrichtung nach Anspruch 30, **dadurch gekennzeichnet, dass** der Hebel (29) ausgeführt ist, um zumindest eine Öffnung (8) zu verschließen, die am Rande und auf der Innenseite des Anschlussbundes (40) eingerichtet ist, der auf der Anschlussseite (48, 68) des Gehäuses (4) oder der Grundplatte (6) angeordnet ist.

32. Vorrichtung nach einem der vorhergehenden Ansprüche, **dadurch gekennzeichnet, dass** das Stellwerk (2) eine Antriebswelle (22) mit zwei Enden (22a, 22b) aufweist, von denen sich das erste Ende (22a) auf der gleichen Seite wie der Anschlussbund (20) befindet, und das zweite Ende (22b) auf der diesem Anschlussbund (20) gegenüberliegenden Seite in Bezug auf den Körper des Stellwerks (2).

33. Vorrichtung nach Anspruch 32, **dadurch gekennzeichnet, dass** die Enden (22a, 22b) der Antriebswelle (22) entweder stecker- oder aufnahmeartig sein können.

34. Vorrichtung nach Anspruch 32 oder 33, **dadurch gekennzeichnet, dass** eine Antriebswelle (22) des Stellwerks (2) gleichzeitig mindestens eine indirekte Antriebskinematik (3, 9) und/oder eine bewegliche Einrichtung (41) antreibt.

35. Vorrichtung nach einem der Ansprüche 32 bis 34, **dadurch gekennzeichnet, dass** die indirekte Antriebskinematik (3, 9) ein Verbindungsmittel (10) umfasst, um die indirekte Antriebskinematik (3, 9) mit der Antriebswelle (22) des Stellwerks (2) oder mit dem Anschlusslager (465) der beweglichen Einrichtung (41) oder mit einer anderen indirekten Antriebskinematik (3, 9) zu verbinden.

36. Vorrichtung nach einem der vorhergehenden Ansprüche, **dadurch gekennzeichnet, dass** der Anschlussbund mit Innengewinde (40) zumindest einen örtlichen Schlitz (410) in seiner Wandung aufweist.

37. Klimatisierungs- und Heizungsanlage, umfassend ein Luftumlaufgehäuse (4), in dem eine Verschlussklappe (41) untergebracht ist, wobei die Verschlussklappe von einem Stellwerk (2) angetrieben wird, **dadurch gekennzeichnet, dass** sie eine Befestigungsvorrichtung nach einem der Ansprüche 1 bis 36 umfasst, um das Stellwerk fest mit dem Gehäuse zu verbinden.

## Claims

1. Device for attaching an actuator (2) to a housing (4) for automobile vehicles, wherein the actuator (2) is designed to drive a moving part (41) located inside the housing (4), wherein the device comprises attachment means to attach the actuator to the housing, **characterised in that** the attachment means comprise two conjugated connecting collars (20, 40), respectively mounted on a connecting face (28) of the actuator and on a connecting face (48) of the housing, and **in that** said connecting collars may be assembled with a male/female type connection onto the outside of said housing.

2. Device according to claim 1, **characterised in that** a support (6) is interposed between the actuator (2) and the housing (4) and comprises a connecting face (68) onto which the connecting collar (40) is mounted.

3. Device according to any of claims 1 or 2, **characterised in that** the connecting collars (20, 40) are conformed so that the actuator connects to the housing (4) or the support (6) by a translation movement in the direction of the drive shaft towards the inside of the housing, followed by a rotational movement to a predefined position.

4. Device of claim 3, **characterised in that** the connecting collars (20, 40) are conformed so that they cause a translation movement towards the housing (4) when the actuator (2) makes the rotational movement.

5. Device according to any of the previous claims, **characterised in that** the connecting collars (20, 40) have conjugated helicoidal connecting forms on at least one part of their wall, and **in that** the connecting forms of the male collar (20) feature discontinuous helicoidal ramps (200).

6. Device according to any of the claims, **characterised in that** the connection between the collars (20, 40) is of the bayonet type.

7. Device according to any of the previous claims, **characterised in that** the attachment means further comprise a stop device (462, 23) that is adapted to block the rotation of the actuator with respect to the housing or the support (6), in the stop position.

8. Device according to claim 7, **characterised in that** the stop device comprises an attachment bracket (23), fitted onto the actuator and a retaining mechanism (462) fitted onto the connecting face (48, 68) of the housing (4) or the support (6), wherein said bracket is designed to be clipped to the retaining mechanism to attach it, when the actuator reaches its stop position.

9. Device according to claim 8, **characterised in that** the retaining mechanism comprises a guide element (460) and retaining elements (462), wherein the guide element is conformed so that it positions the attachment bracket (23) substantially opposite the retaining element (462) during the rotational movement of the actuator (2) and the retaining elements (462) are conformed so that they clip onto the attachment bracket (23) to attach it, when the actuator reaches its stop position.

10. Device according to claim 9, **characterised in that** the attachment bracket (23) comprises an elastic section, and **in that** the guide element (460) is conformed so that it exerts a progressive stress on the attachment bracket (23) during the rotational movement of the actuator (2), wherein the elastic section of the attachment bracket is released when the bracket is substantially positioned opposite the retaining elements (462).

11. Device according to claim 10, **characterised in that** the guide element (460) defines an arc of a circle that is eccentric with respect to the axis of rotation of the actuator (2).

12. Device according to any of claims 8 to 11, **characterised in that** the attachment bracket (23) extends in a general plane that is substantially parallel to the connecting face (28) onto which it is fitted.

13. Device according to any of claims 8 to 11, **characterised in that** the attachment bracket (23) extends in a general plane that is substantially perpendicular to the connecting face (28) onto which it is fitted.

14. Device according to any of claims 7 to 13, **characterised in that** the stop device comprises a retaining pin (463) fitted on the housing (4) or the support (6), and **in that** the actuator (2) is adapted so that it may be bolted onto the retaining pin after assembly of the actuator and the housing (4).

15. Device according to any of claims 7 to 14, **characterised in that** it further comprises a locating device (50) positioned so that it only authorises the electrical connection of the actuator when the rotation of the actuator (2) with respect to the housing (4) or the support (6) is blocked by the stop device (462, 23).

16. Device according to any of the previous claims, **characterised in that** it further comprises a positioning device (500) comprising three sub-positioning devices (501, 502, 503) positioned so that they form an arc of a circle, wherein the centre of this arc is located by the axis of rotation D of the collar (20) of the actuator (2) and this layout in an arc of a circle restricts the position of the actuator (2) with respect to the housing (4) or the support (6) to a single position.

17. Device according to claim 16, **characterised in that** it at least comprises first stabilising means (7) located between one side (21) of the actuator (2) and a first sub-positioning device (501), wherein the first stabilising means (7) maintain the attachment bracket (23) of the actuator (2) in contact against one of the clipping walls (4620) forming the retaining mechanism (462).

18. Device according to claim 17, **characterised in that** the first stabilising means (7) are stationary with respect to the actuator (2) or the first sub-positioning device (501).

19. Device according to any of the previous claims, **characterised in that** it further comprises at least second stabilising means (7') located between the connecting face (28) of the actuator (2) and the connecting face (48, 68) of the housing (4) or the support (6), wherein these second stabilising means (7') maintain in contact at least two conjugated helicoidal connecting forms.

20. Device according to claim 19, **characterised in that** the second stabilising means (7') are attached to the actuator (2) or the connecting face (48, 68).

21. Device according to any of the previous claims, **characterised in that** the attachment means further comprise two axial retaining lugs (25, 45) that are substantially L shaped respectively fitted onto the connecting face (48, 68) of the housing (4) or the support (6) and onto the connecting face (28) of the actuator, wherein the L shape of each lug has a first arm (251, 451) which substantially extends perpendicularly to the corresponding connecting face (28, 48, 68) and a second arm that is substantially (252, 452) parallel to the corresponding connecting face, and **in that** the second arm (452) of the housing lug is conformed so that it presses against the second arm (252) of the actuator lug towards the inside of the housing when the actuator reaches its stop position.

22. Device according to any of the previous claims, **characterised in that** the connecting collar (20) of the actuator (2) is conformed so that it obstructs at least one orifice (8) in the connecting face (48, 68) supporting the conjugated collar (40), wherein the orifice (8) is positioned at the periphery, on the inside or outside of said conjugated collar (40).

23. Device according to any of the previous claims, **characterised in that** the connecting collar (20) of the actuator (2) comprises helicoidal connecting forms (200) both on an inside face and on an outside face of its wall or on one of these faces of its wall.

24. Device according to any of the previous claims, **characterised in that** the moving part (41) has a connecting bearing bush (465) and the actuator has a drive shaft (22), wherein the connecting bearing bush is conformed so that it may be connected to the drive shaft of the actuator when the connecting collars (20, 40) are attached.

25. Device according to claim 24, **characterised in that** the drive shaft (22) of the actuator (2) and the connecting bearing bush (465) of the moving part (41) are coaxial with respect to the axis of the connecting collars (20, 40).

26. Device according to claim 25, **characterised in that** the drive shaft (22) of the actuator and the connecting bearing bush (465) of the moving part (41) are eccentric with respect to the axis of the connecting collars.

27. Device according to claim 26, **characterised in that** the bearing bush (465) has a cut-out (4650) that is conformed so that the drive shaft (22) of the actuator nests radially in the bearing bush through the cut-out when the actuator reaches its stop position.

28. Device according to claim 26, **characterised in that** the drive shaft (22) of the actuator (2) has a cut-out (2200) that is conformed so that it nests radially in the connecting bearing bush (465) of the moving part (41) through the cut-out (2200) when the actuator (2) reaches its stop position.

29. Device according to claim 24, **characterised in that** the bearing bush (465) of the moving part (41) is eccentric with respect to the drive shaft (22) of the actuator (2), and **in that** the drive shaft (22) of the actuator (2) is connected to the bearing bush (465) of the moving part (41) by indirect drive kinematics (3, 9).

30. Device according to claim 29, **characterised in that** the indirect drive kinematics (3, 9) comprise a connecting rod (30) that is articulated on the drive shaft (22) of the actuator (2) by a first lever (29) and on the bearing bush (465) of the moving part by a second lever (32), and **in that** the connecting collars (20, 40) of the actuator (2) and the housing (4) or the support (6) each have a cut-out (290, 490) in their wall, that is conformed to allow the first lever (29) pass through the collars (20, 40).

31. Device according to claim 30, **characterised in that** the lever (29) is conformed so that it obstructs at least one orifice (8) positioned at the periphery and on the inside of the connecting collar (40) fitted onto the connecting face (48, 68) of the housing (4) or the support (6).

32. Device according to any of the previous claims, **characterised in that** the actuator (2) has a drive shaft (22) with two ends (22a, 22b), of which the first end (22a) is located on the same side as the connecting collar (20) and the second end (22b) is on the opposite side with respect to the body of the actuator (2) to this connecting collar (20).

33. Device according to claim 32, **characterised in that** the ends (22a, 22b) of the drive shaft (22) may be indifferently of the male or female type.

34. Device according to claims 32 or 33, **characterised in that** a drive shaft (22) of the actuator (2) drives simultaneously at least one indirect drive kinematics (3, 9) and/or a moving part (41).

35. Device according to any of claims 32 to 34, **characterised in that** the indirect drive kinematics (3, 9) comprise connection means (10) so that said indirect drive kinematics (3, 9) are connected to the drive shaft (22) of the actuator (2) or to the connecting bearing bush (465) of the moving part (41) or to another indirect drive kinematics (3, 9).

36. Device according to any of the previous claims, **characterised in that** the female connecting collar (40) has at least one local opening (410) in its wall.

37. Air conditioning and heating installation comprising an air circulation housing (4) which contains a sealing flap (41), wherein the sealing flap is driven by an actuator (2), **characterised in that** it comprises an attachment device according to any of claims 1 to 36 to attach the actuator to the housing.
